# FASCICULE DE BREVET EUROPEEN

(11) **EP 2 588 209 B1**
(45) Date de publication et mention de la délivrance du brevet: **23.09.2015**
(21) Numéro de dépôt: 11729960.2
(22) Date de dépôt: 27.06.2011
(51) Int. Cl.: A63F 9/18, A63H 11/18, B25J 9/00, A63F 9/24

(54) **ROBOT HUMANOIDE JOUEUR, METHODE ET SYSTEME D'UTILISATION DUDIT ROBOT**
SPIELENDER HUMANOIDER ROBOTER, VERFAHREN UND SYSTEM ZUR VERWENDUNG DIESES ROBOTERS
HUMANOID PLAYING ROBOT, METHOD AND SYSTEM FOR USING SAID ROBOT

(30) Priorité: 02.07.2010 FR 1055382
(43) Date de publication de la demande: 08.05.2013
(73) Titulaire: Aldebaran Robotics, 75014 Paris (FR)
(72) Inventeur: MONCEAUX, Jérôme, F-75013 Paris (FR); BOUDIER, Céline, F-75014 Paris (FR)
(74) Mandataire: Nguyen Van Yen, Christian
(86) Numéro de dépôt international: PCT/EP2011/060693
(87) Numéro de publication internationale: WO 2012/000927

(56) Documents cités:
- WO-A1-00/44464
- WO-A1-01/12285
- WO-A2-01/70361
- US-A1- 2002 081 937

## Description

La présente invention appartient au domaine des robots humanoïdes. Plus précisément, elle s'applique aux méthodes de programmation et d'emploi de robots de ce type pour des usages spécialisés, tels que le jeu. Un robot peut être qualifié d'humanoïde à partir du moment où il possède certains attributs de l'apparence et des fonctionnalités de l'homme: une tête, un tronc, deux bras, éventuellement deux mains, deux jambes, deux pieds...Au-delà de l'apparence, les fonctions qu'un robot humanoïde est capable de remplir vont dépendre de sa capacité à effectuer des mouvements, à parler et à « raisonner ». Des robots humanoïdes sont capables de marcher, de faire des gestes, avec les membres ou avec la tête. La complexité des gestes qu'ils sont capables d'effectuer augmente sans cesse. Ils peuvent même jouer au football, la Robocup étant devenue le challenge où s'affrontent les meilleures équipes de conception de robots humanoïdes du monde. Certains robots peuvent parler, en réponse à des paroles entendues et interprétées ou en déclamant un texte qui leur est envoyé par e-mail ou mis sous le regard. Des ordinateurs, pour le moment non embarqués sur des robots humanoïdes ont été conçus pour jouer aux échecs et ont battu les meilleurs grands maîtres.

Les robots virtuels sont par ailleurs très présents dans l'univers du jeu vidéo, avec un développement considérable des avatars de personnages réels qui vivent une « deuxième vie » dans un univers miroir de l'univers réel (« Second Life »). Mais les robots physiques ont jusqu'à présent été peu mêlés à l'univers du jeu. Tout au plus peut-on signaler quelques réalisations simples, telles que le ROB (Robotic Operating Buddy) de Nintendo™ dans les années 1980. Ce robot est programmé pour réagir à des variations de luminosité, de couleur ou de forme de parties d'un écran et avoir des comportements déterminés en fonction de séquences d'un jeu s'affichant sur l'écran. Ces méthodes ont fait l'objet de plusieurs brevets, notamment les brevets américains US 4,729,563 et US 4,815,733. Le ROB n'est cependant pas mobile sur des jambes, ce qui limite de manière importante sa capacité de participer à des jeux diversifiés. Il n'a pas non plus de capacité de communication par la parole. Le robot humanoïde de la société Sony™, qui a fait l'objet des brevets US 6,580,369 et 6,832,132, est décrit dans des environnements de jeu, notamment de football ou de jeux athlétiques. C'est cependant sa seule activité ludique et il n'a pas de fonction lui permettant de participer à des jeux complexes d'un univers virtuel, tels que des jeux de stratégie. Sont connus également des automates non humanoïdes pour réaliser des fonctions spécialisées de jeu (échecs, certains jeux de cartes, Guitar Hero, etc...). Il serait avantageux de pouvoir disposer d'un robot humanoïde capable de réaliser la totalité de ces fonctions.

Cependant, le problème posé par cette intégration sur une même plate-forme de robot humanoïde des capacités de participer à la fois à des jeux nécessitant une capacité physique, une capacité d'expression et une capacité de réflexion n'a pas été résolu par les solutions de l'art antérieur.

En particulier les documents WO01/12285, US2002/081937 et WO00/44464 divulguent des dispositifs robotiques pouvant avoir, dans certaines conditions, des capacités de dialogue limitées avec un humain. Aucun de ces documents ne divulgue de robot humanoïde ayant une capacité de déplacement sur des membres inférieurs disposant de capacités de lever de doute paramétrables dans des interactions avec un humain ou un autre robot.

La présente invention résout ce problème en procurant un robot humanoïde qui peut, pour une pluralité de jeux, servir d'interface à un joueur pour dialoguer avec un jeu, lui fournir une aide intelligente pour progresser dans le jeu et occuper une place à part entière de joueur dans un jeu multi-joueurs.

A cet effet, la présente invention divulgue un robot humanoïde conformément à la revendication 1.

Avantageusement, le robot de l'invention est apte à reconnaître des objets dans son environnement et à les intégrer dans la séquence dudit jeu.

Avantageusement, le robot de l'invention est l'animateur d'un jeu de questions-réponses auquel participe au moins un autre joueur qui doit fournir les réponses aux questions posées par le robot.

Avantageusement, le robot de l'invention est un des joueurs d'un jeu auquel participe au moins un autre joueur et dans lequel il doit reconnaître une personne ou une chose en fonction au moins d'indices qui lui sont communiqués par ledit au moins un autre joueur.

Avantageusement, le robot de l'invention est apte à rechercher une aide sur internet pour effectuer ladite reconnaissance.

Avantageusement, le robot de l'invention est un joueur d'un jeu dans lequel il est apte à coopérer avec au moins un autre joueur pour résoudre au moins une énigme.

Avantageusement, les mouvements du robot de l'invention sont déterminés pour partie en fonction de premières consignes de déplacements qui lui sont communiquées par une télécommande manipulée par un premier joueur, de deuxièmes consignes de déplacements, antagonistes aux premières consignes, qui lui sont communiquées visuellement par un deuxième joueur et de troisièmes consignes de déplacements, antagonistes aux deuxièmes consignes qui lui sont communiquées par un troisième joueur.

Avantageusement, ladite télécommande est un boîtier portable muni d'au moins un capteur de mouvement et apte à traduire les sorties dudit au moins un capteur en lesdites premières consignes.

Avantageusement, au moins deux robots participent à un même jeu, lesdits au moins deux robots étant en communication par au moins un message visuel, sonore et/ou gestuel.

Avantageusement, au moins deux robots participent à un même jeu, lesdits au moins deux robots étant en communication par échange de messages de comportements.

Avantageusement, ledit échange de messages de comportements est activé après une étape d'identification réciproque desdits robots par échange d'informations les caractérisant.

Avantageusement, lesdits au moins deux robots sont en outre aptes à télécharger un signal de synchronisation de leurs mouvements.

Avantageusement, au moins un robot joueur et un autre joueur se situent dans deux lieux non reliés par un réseau local.

Avantageusement, lesdits au moins un robot joueur et un autre joueur communiquent par protocole de communication sur réseau étendu et en ce que ledit robot joueur est doté de moyens autonomes de traitement pour l'encodage des accès réseau.

Avantageusement, un joueur est apte à communiquer avec le robot de l'invention par l'intermédiaire d'un code visuel.

Avantageusement, le robot de l'invention est apte à réaliser une fonction d'assistance d'au moins un autre joueur consistant à effectuer au moins une action dans le jeu à la place du joueur.

Avantageusement, ladite action consiste à sauvegarder le jeu.

Avantageusement, ladite fonction d'assistance consiste à appliquer des consignes de contrôle de l'accès au jeu.

Avantageusement, le robot de l'invention est apte à déclencher et gérer les interruptions et reprises d'une séquence de jeu.

L'invention divulgue également un procédé de contrôle d'un robot humanoïde conformément à la revendication 17.

L'invention divulgue également un programme d'ordinateur conformément à la revendication 18.

Un robot humanoïde tel que celui objet de la présente invention offre aux joueurs une expérience complètement nouvelle en mettant à leur disposition un avatar physique d'un personnage virtuel qui peut ainsi « sortir » du monde virtuel pour rejoindre le monde réel.

Compte tenu de la grande versatilité des outils de développement des programmes de jeux mis à la disposition des créateurs il est tout à fait possible d'envisager le développement d'un univers entièrement nouveau de jeux dont les utilisateurs pourront approvisionner les applications sur des boutiques virtuelles spécialisées ou se les échanger, si un modèle non marchand est choisi.

Le robot humanoïde de l'invention présente également des avantages complémentaires. Il peut remplacer au pied levé un joueur qui doit suspendre sa participation à un jeu. Il peut également être prévu pour sauvegarder périodiquement la configuration de jeu, ce qui permet d'ajouter un moyen de sauvegarde supplémentaire, en cas de problème matériel ou logiciel sur une ou plusieurs stations ou serveurs de jeu. Il peut être doté de fonctions de contrôle parental sophistiquées lui permettant d'adapter les périodes et les modalités d'un jeu à l'âge ou au profil des joueurs et de fournir en temps réel et en langage naturel aux joueurs concernés les explications correspondant aux critères de contrôle programmés.

Compte tenu de ses capacités de communication, le robot humanoïde de l'invention peut facilement recevoir des mises à jour de ses programmes et/ou de ses données qui lui permettent de participer à de nouveaux jeux ou à de nouvelles versions des mêmes jeux.

Plusieurs robots humanoïdes peuvent également participer à un même jeu dans des rôles identiques (tous joueurs, tous aides, tous interfaces) ou dans des rôles différents.

Enfin, les fonctions de jeu du robot humanoïde de l'invention ne sont qu'une partie des fonctions complexes qu'un tel robot peut accomplir. Un tel robot peut en effet assurer une mission d'assistance et de surveillance d'une personne (enfant, personne âgée, malade...) auprès de laquelle il est placé, en donnant le cas échéant une alerte en cas de détection d'une chute ou de dégradation d'une fonction programmée pour être surveillée.

L'invention sera mieux comprise et ses différentes caractéristiques et avantages ressortiront de la description qui suit de plusieurs exemples de réalisation et de ses figures annexées dont :
- La figure 1 est un schéma de l'architecture physique d'un robot humanoïde dans un mode de réalisation de l'invention ;
- La figure 2 est un schéma de l'architecture des logiciels de haut niveau permettant le pilotage des fonctions du robot dans un mode de réalisation de l'invention ;
- La figure 3 est un schéma de l'architecture fonctionnelle d'édition et de programmation des comportements d'un robot dans un mode de réalisation de l'invention ;
- Les figures 4a, 4b, 4c, 4d, 4e et 4f représentent différentes architectures fonctionnelles et/ou techniques de mise en oeuvre de l'invention ;
- La figure 5 est une illustration d'un jeu de devinettes que peut animer un robot humanoïde joueur dans un mode de réalisation de l'invention;
- La figure 6 représente l'organigramme de traitement d'un autre jeu auquel peut jouer un robot humanoïde joueur en communication avec un serveur de jeux dans un mode de réalisation de l'invention;
- Les figures 7a, 7b et 7c illustrent un jeu de stratégie auquel peut participer un robot humanoïde joueur dans un mode de réalisation de l'invention ;
- Les figures 8a, 8b, 8c et 8d illustrent un jeu de défi qui est joué avec un robot humanoïde dans un mode de réalisation de l'invention.

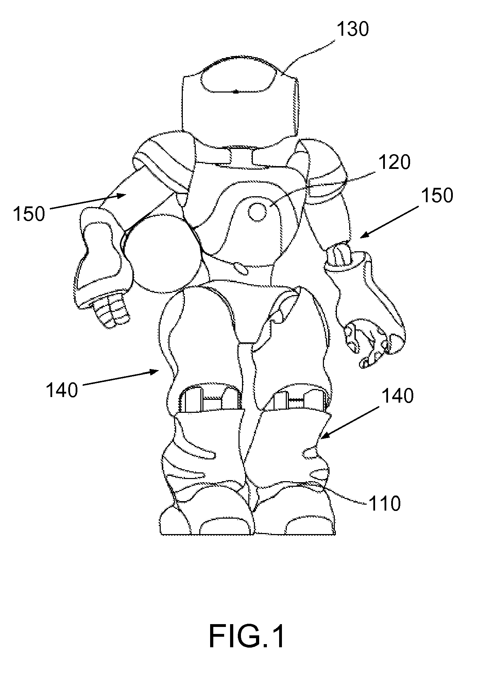

La figure 1 illustre l'architecture physique d'un robot humanoïde dans un mode de réalisation de l'invention. Un tel robot a été divulgué notamment dans la demande de brevet WO2009/124951 publiée le 15/10/2009. Cette plateforme a servi de base aux améliorations qui ont conduit à la présente invention. Dans la suite de la description, ce robot humanoïde peut être indifféremment désigné sous cette appellation générique ou sous sa marque commerciale NAO™, sans que la généralité de la référence en soit modifiée. Ce robot comprend environ deux douzaines de cartes électroniques du type 110 de commande de capteurs et d'actionneurs qui pilotent les articulations. La carte 110 montrée sur la figure est celle qui contrôle le pied gauche. Une des vertus de l'architecture est que les cartes contrôlant les articulations sont pour la plupart interchangeables. Une articulation a normalement au moins deux degrés de liberté et donc deux moteurs. Chaque moteur est piloté en angle. L'articulation comporte également plusieurs capteurs de position, notamment des MRE (Magnetic Rotary Encoder). La carte électronique de contrôle comporte un microcontrôleur du commerce. Ce peut être par exemple un DSPIC™ de la société Microchip. C'est un MCU 16 bits couplé à un DSP. Ce MCU a un cycle d'asservissement en boucle d'une ms. Le robot peut également comporter d'autres types d'actionneurs, notamment des LED (Diodes électroluminescentes) dont la couleur et l'intensité peuvent traduire les émotions du robot. Celui-ci peut également comporter d'autres types de capteurs de position, notamment une centrale inertielle, des FSR (Capteurs de pression au sol), etc....

La tête comporte l'intelligence du robot, notamment la carte 130 qui exécute les fonctions de haut niveau qui permettent au robot d'accomplir les missions qui lui sont assignées, notamment, dans le cadre de la présente invention, la participation à des jeux. La carte 130 pourrait cependant être située ailleurs dans le robot, par exemple dans le tronc. On verra cependant que cette localisation, lorsque la tête est amovible, permet de remplacer ces fonctions de haut niveau et donc notamment de changer complètement l'intelligence du robot et donc ses missions très rapidement. Ou à l'inverse de changer un corps par un autre (par exemple un corps défectueux par un non défectueux) en gardant la même intelligence artificielle. La tête peut comporter également des cartes spécialisées, notamment dans le traitement de la parole ou de la vision ou également dans le traitement d'entrées/sorties de service, comme l'encodage nécessaire à l'ouverture d'un port pour établir une communication à distance sur un réseau étendu WAN (Wide Area Network). Le processeur de la carte 130 peut être un processeur x86 du commerce. On choisira de manière privilégiée un processeur à basse consommation tel que le Gode™ de la société AMD (32 bits, 500 MHz). La carte comporte également un ensemble de mémoires RAM et flash. Cette carte gère également les communications du robot avec l'extérieur (serveur de comportements, autres robots...), normalement sur une couche de transmission WiFi, WiMax, éventuellement sur une réseau public de communications mobiles de données avec des protocoles standards éventuellement encapsulés dans un VPN. Le processeur est normalement piloté par un OS standard ce qui permet d'utiliser les langages de haut niveau usuels (C, C++, Python, ...) ou les langages spécifiques de l'intelligence artificielle comme URBI (langage de programmation spécialisé dans la robotique) pour la programmation des fonctions de haut niveau.

Une carte 120 est logée dans le tronc du robot. C'est là que se situe le calculateur qui assure la transmission aux cartes 110 des ordres calculés par la carte 130. Cette carte pourrait être logée ailleurs dans le robot. Mais la localisation dans le tronc est avantageuses car elle se situe près de la tête et au carrefour des quatre membres, ce qui permet donc de minimiser la connectique reliant cette carte 130 à la carte 120 et aux cartes 110. Le calculateur de cette carte 120 est également un processeur du commerce. Ce peut avantageusement être un processeur 32 bits du type ARM 9™ cadencé à 100 MHz. Le type du processeur, sa position centrale, proche du bouton de marche/arrêt, sa liaison au contrôle de l'alimentation en font un outil bien adapté pour la gestion de l'alimentation du robot (mode veille, arrêt d'urgence, ...). La carte comporte également un ensemble de mémoires RAM et flash.

Cette architecture à trois niveaux est particulièrement avantageuse pour la mise en oeuvre de la présente invention dans laquelle le robot doit pouvoir exécuter des mouvements coordonnés et d'autres actions tels que des lectures de capteurs et simultanément interpréter des paroles ou des signes émis dans son environnement et réagir ou répondre à ceux-ci.

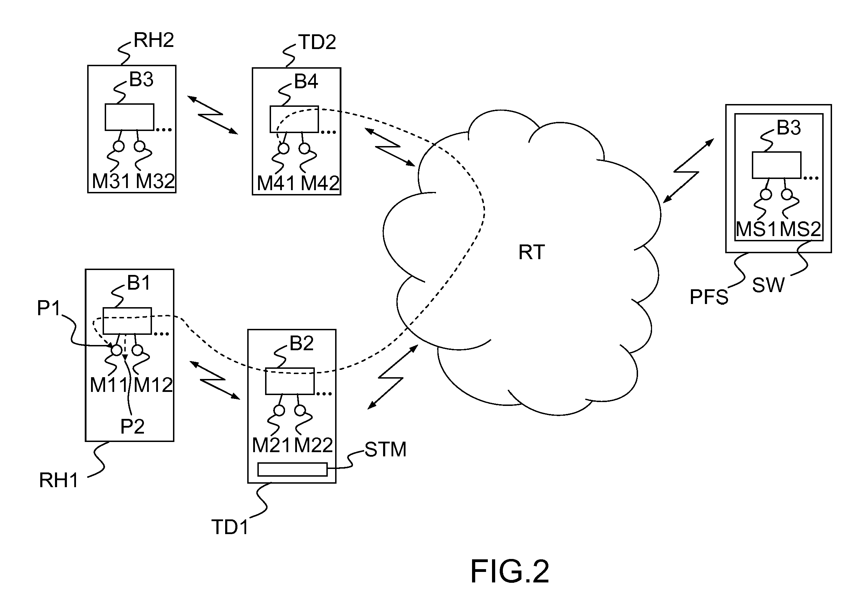

La figure 2 est un schéma de l'architecture des logiciels de haut niveau permettant le pilotage des fonctions du robot dans un mode de réalisation de l'invention.

Une architecture logicielle de ce type a été divulguée notamment dans la demande de brevet WO2009/124955 publiée le 15/10/2009. Elle comporte les fonctions de base de gestion des communications entre un robot et un PC ou un site distant et d'échange de logiciels qui fournissent l'infrastructure logicielle nécessaire à la mise en oeuvre de la présente invention. Cette architecture est décrite ci-dessous de manière générique, sans mention spécifique des fonctions logicielles utilisées dans un jeu donné, étant entendu que ces fonctions sont traitées comme toute autre fonction logicielle de gestion des comportements du robot de la présente invention.

Sur la figure 2 est représenté très schématiquement un premier robot humanoïde RH1 communiquant avec un premier terminal distant TD1, par exemple par liaison sans fil pour des raisons de mobilité. On entend par terminal distant un terminal distant de la plate-forme serveur PFS, fournissant, par l'intermédiaire d'un réseau de communication, l'accès à un service web SW, dédié à ce type de robot humanoïde RH1.

Bien entendu, les liaisons de communication entre éléments du système peuvent être filaires, et les terminaux mobiles peuvent être, en variante, des téléphones portables ou des ordinateurs portables.

Un deuxième robot humanoïde RH2 communique avec un deuxième terminal distant TD2, par exemple également par liaison sans fil de manière à ne pas entraver la mobilité du robot humanoïde RH2.

Les terminaux distants TD1 et TD2 et la plateforme serveur PFS sont reliés en réseau par l'intermédiaire du réseau de communication RC. Pour le service web de la plateforme serveur PFS ainsi que pour les terminaux distants TD1 et TD2, et que pour les robots humanoïdes RH1 et RH2, un seul module respectif de mise en relation B5, B2, B4, B1 et B3 dédié à au moins un module comprenant au moins une série d'instructions mettant en oeuvre une fonction logicielle par exécution par un processeur. Les modules respectifs M51, M52, M21, M22, M41, M42, M11, M12, M31, M32 des modules de mise en relation B5, B2, B4, B1 et B3 sont sur cet exemple représentés au nombre de deux par module de mise en relation, mais ce nombre peut être différent et quelconque pour chaque module de mise en relation.

Nous allons maintenant illustrer un exemple nullement limitatif de fonctionnement du système imaginé par un utilisateur du premier terminal distant TD1 possédant le premier robot humanoïde RH1. Il peut, par exemple, faire réaliser par son robot un certain nombre de fonctions au moyen d'une application logicielle embarquée sur le premier terminal distant TD1, ou accessible sur la plateforme serveur PFS depuis le premier terminal distant TD1.

Par exemple il réalise simplement, aux moyens d'outils graphiques de l'application logicielle, une application pour son robot, dans laquelle le robot va marcher pendant 10 secondes puis dire "Bonjour à tous". Cette application est par exemple téléchargée dans le premier robot humanoïde RH1 sous forme d'un module, par exemple le module M11, puis déclenchée par l'utilisateur par l'intermédiaire du premier terminal distant TD1.

Le premier robot humanoïde RH1 déclenche le module M11 qui doit utiliser en premier une fonction "Marche". Le module M11 utilise alors un module d'interface de connexion et d'appel de fonction ou proxy P1 qui effectue une requête au module de mise en relation B1 auquel est lié le module M11. Le module de mise en relation B1 effectue des requêtes à destination de ses propres modules et des modules de mise en relation du réseau auquel il est directement relié (modules de mise en relation enfants) qui répètent cette opération de manière itérative, jusqu'à ce qu'un module de mise en relation du réseau réponde à la requête avec la localisation de la fonction appelée qu'il a dans un module. La réponse à la requête étant également transmise de manière itérative par les modules de mise en relation parents (en sens inverse) jusqu'au module de mise en relation B1 directement lié au proxy P1 ayant besoin de se connecter et d'appeler cette fonction. Par exemple, la fonction demandée pour la marche est localisée dans le module M41 du deuxième terminal distant TD2. En retour le module de mise en relation B4 a retourné les paramètres d'appels de la fonction "marche", qui, par exemple, contiennent un paramètre Durée de type entier en secondes représentant la durée pendant laquelle le robot va marcher, et un paramètre Exclusif, de type booléen, représentant la marche exclusive ou non du robot, i.e. si on autorise le robot à faire une autre action ou non pendant qu'il marche. Dans cet exemple, on appelle la fonction marche avec le paramètre Durée valant 10 et le paramètre Exclusif valant 1, car on veut qu'il parle après avoir marché 10 seconde dans cet exemple.

Le module d'interface de connexion et d'appel P1 peut donc effectuer la connexion et l'appel de la fonction "marche" avec les paramètres souhaités, à distance, comme si elle était située en local. Les modules d'interface de connexion et d'appels de fonction utilisent un logiciel d'intercommunication capable d'appeler une fonction d'un module localisé sur un terminal ou serveur différent, la fonction pouvant être écrite par une série d'instructions dans un langage informatique différent de celui du module appelant. Les proxies utilisent, par exemple, le logiciel d'intercommunication SOAP. On a donc une architecture de communication inter-plateformes et inter-langages. Une fois cette fonction délocalisée "marche" effectuée, le module M11 doit faire appel à une fonction "parle". Un autre module d'interface de connexion et d'appel de fonction ou proxy P2 effectue une requête au module de mise en relation B1 auquel est lié le module M11. Le module de mise en relation B1 effectue une requête à destination de ses propres modules M11 et M12 dans un premier temps, par l'intermédiaire d'une fonction réalisée sous la forme d'une suite d'instructions mémorisées, qui va, par exemple, retourner la présence de cette fonction "parle" dans le module M12. Le module de mise en relation B1 informe le module d'interface de connexion et d'appel de fonction P2 qui peut alors appeler directement, par un appel de type appel local la fonction "parle" du module M12, avec comme paramètre, par exemple, le texte à dire "bonjour", ce paramètre ayant été transmis au proxy P2 par le module de mise en relation B1.

En outre, le système comprend un module de mémorisation et de gestion STM (diminutif de "Short Term Memory" en langue anglaise) de paramètres représentatifs de l'état du terminal mobile, en l'occurrence du robot humanoïde RH1, adaptés pour mettre à jour les valeurs desdits paramètres sur réception d'un événement externe, et pour informer un module, sur demande préalable, d'une mise à jour d'un desdits paramètre mémorisé. Aussi le module prévenu pourra engager une action en fonction des modifications de paramètres dont il a été informé.

En relation avec l'exemple préalablement décrit, par exemple, le module de mémorisation et de gestion STM peut mémoriser l'état d'un paramètre représentatif de l'apparition de quelqu'un détecté par un détecteur de mouvement du robot RH1. Lorsque ce paramètre passe d'un état représentatif de personne dans l'environnement immédiat du robot à un état représentatif de quelqu'un présent dans l'environnement immédiat du robot, sur demande effectuée préalablement par le module M11, le module de mémorisation et de gestion STM prévient, par un événement ou signal ce changement de valeur. Le module M11 peut, alors par exemple, déclencher automatiquement le déclenchement successif décrit précédemment (les fonctions "marche" et "parle").

Dans l'exemple de la figure 2, le module de mémorisation et de gestion STM fait partie du terminal distant TD1, mais, en variante, il peut faire partie de l'autre terminal distant TD2, de la plate-forme serveur PFS, ou d'un robot humanoïde RH1 ou RH2.

Le module de mémorisation et de gestion STM est également capable de stocker en mémoire une évolution temporelle de certains paramètres sur des intervalles de temps respectifs de référence. Ainsi, un module du système peut, en outre, avoir accès à l'évolution des valeurs de ces paramètres depuis une certaine durée, et tenir compte de ces évolutions dans les actions à mener.

En variante, les modules des fonctions appelées peuvent être localisée sur la plate-forme serveur PGS, sur un robot humanoïde RH1, RH2 ou sur un terminal distant TD1, TD2 du réseau de communication RC.

Ainsi, la présente invention permet d'avoir un programme réparti sur le réseau, et un fonctionnement identique du terminal mobile, qu'il fasse un appel local ou distant à une fonction.

En outre, la présente architecture permet également d'avoir un ensemble de paramètres mémorisés représentatifs de l'état du terminal mobile, et de pouvoir tenir compte d'évolutions de cet état pour déclencher automatiquement certaines actions.

De surcroît, le module de mémorisation et de gestion peut également enregistrer une évolution de valeurs de paramètres durant un intervalle de temps prédéterminé, ce qui permet à un module d'avoir accès à un historique de l'évolution de ces paramètres.

Ces fonctions de communication et de mémorisation sont particulièrement utiles pour la mise en oeuvre de la présente invention.

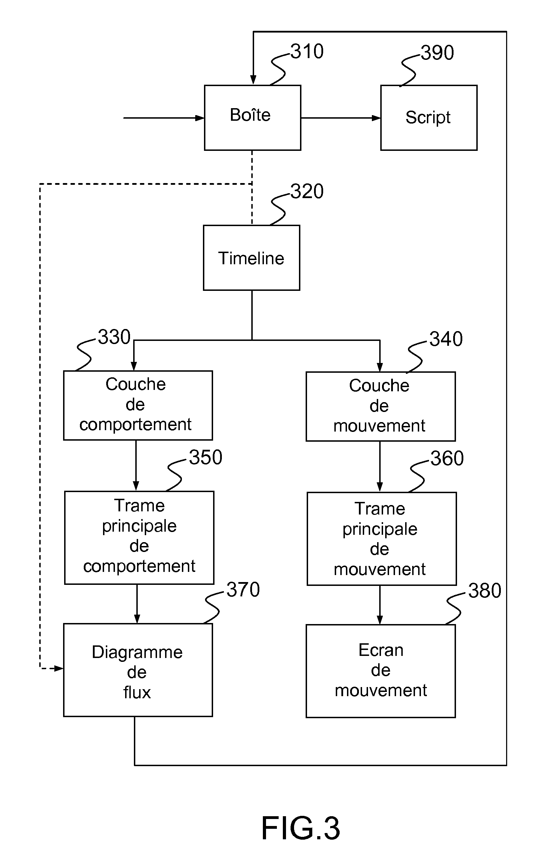

La figure 3 est un schéma de l'architecture fonctionnelle d'édition et de programmation des comportements d'un robot dans un mode de réalisation de l'invention.

Une telle architecture a été décrite par la demande de brevet PCT/EP2010/057111 déposée le 25/05/2010. Le logiciel d'édition et de programmation des comportements d'un robot humanoïde permettant de mettre en oeuvre ladite architecture est commercialement dénommé Chorégraphe™, et peut être désigné indifféremment pas son nom générique ou par son nom commercial, sans altérer la généralité des références.

Le robot contrôlé par cette architecture peut être un robot humanoïde ayant une tête, un tronc et quatre membres, chacune des parties étant articulée, chaque articulation étant commandée par un ou plusieurs moteurs. Cette architecture permet à un utilisateur du système de commander un tel robot en créant des comportements simulés sur un robot virtuel et exécutés sur le robot réel relié au système par une liaison filaire ou sans fil.

Il s'agit de visualiser, de simuler et de faire exécuter des comportements (tels que la marche - tout droit, à droite ou à gauche de n pas ; un « hello » - mouvements d'un des bras au-dessus de la tête ; la parole, etc...) et des mouvements (de la tête, d'une partie de membre, d'un angle donné) sur l'écran d'un ordinateur programmé pour ce faire.

La figure 3 est un organigramme des traitements qui illustre l'articulation des commandes déclenchées par des événements avec leur dimension temporelle. Les commandes déclenchées par des événements sont représentées dans la sémantique de l'invention par des Boxes ou « Boîtes » ou «Boîtes de commande » 310. Une Boîte est une structure de programmation arborescente qui peut comprendre un ou plusieurs des éléments ci-dessous qui sont définis ensuite:
- Une « Timeline » ou axe temporel de Trames 320;
- Un « Diagram » ou Diagramme de flux 370
- Un Script 390.

Les Boîtes de commande sont normalement reliées entre elles par des connections qui transmettent le plus souvent une information d'événement d'une Boîte à l'autre, comme détaillé plus loin dans la description. Toute Boïte est reliée directement ou indirectement à une « Boîte racine » ou Root qui initialise le scénario de comportement/mouvement du robot.

Un axe temporel de Trames 320 représente la contrainte temporelle à laquelle sont soumis les comportements et les mouvements du robot définis dans la Boîte dans laquelle le dit Axe temporel de Trames est inséré. Dans la suite de la description et des revendications, nous utiliserons la dénomination anglo-saxonne de Timeline, communément admise avec le même sens dans le monde de la programmation. La Timeline réalise ainsi la synchronisation des comportements et mouvements de la Boîte. Elle est découpée en frames (Trames) auxquelles est associée une vitesse de déroulement définie en nombre de Trames par seconde ou Frames Per Second (FPS). Le FPS de chaque Timeline est paramétrable par l'utilisateur. Par défaut, le FPS peut être fixé à une valeur donnée, par exemple 15 FPS.

Une Timeline peut comprendre :
- Une ou plusieurs Behavior Layers ou « Couches de comportement » 330, comprenant chacune une ou plusieurs Behavior Key Frames ou « Trames principales de comportement » 50, qui peuvent comprendre elles-mêmes un ou plusieurs Diagrams ou « Diagrammes de flux » 70, qui sont en fait des ensembles de Boîtes qui peuvent également être rattachées directement à une Boîte de niveau supérieur, sans passer par une Couche de comportement ni une Timeline;
- Une ou plusieurs Motion Layers ou « Couches de mouvement » 40, comprenant chacune une ou plusieurs Motion Key Frames ou «Trames principales de mouvement » 360 qui peuvent comprendre un ou plusieurs Motion Screens ou « Ecrans de mouvement » 380.

Une Couche de comportement définit un ensemble de comportements du robot ou Trames principales de comportement. Plusieurs Couches de comportement peuvent être définies au sein d'une même Boîte. Elles seront alors programmées pour se dérouler de manière synchronisée par la Timeline de la Boîte.

Une Couche de comportement pourra comprendre un ou plusieurs Trames principales de comportement. Une Trame principale de comportement définit un comportement du robot, tel que la marche (« Walk »), la parole (« Say »), le jeu de musique (« Music »)...Un certain nombre de comportements sont pré-programmés dans le système de l'invention pour être directement insérés par l'utilisateur dans un simple « drag and drop » à partir d'une librairie comme détaillé plus loin dans la description. Chaque Trame principale de comportement est définie par un évènement déclencheur qui est le début de la Trame à laquelle elle est insérée dans la Timeline. La fin de la Trame principale de comportement n'est définie que dans la mesure où une autre Trame principale de comportement est insérée à sa suite, ou si un évènement de fin est défini.

Une Couche de mouvement définit un ensemble de mouvements du robot qui sont programmés par une ou plusieurs Trames principales de mouvement successives qui regroupent des mouvements des moteurs des articulations du robot. Ces mouvements à exécuter sont définis par les positions angulaires d'arrivée des dits moteurs qui peuvent être programmées par action sur des écrans de mouvement, lesdites actions étant détaillées plus loin dans la description. Toutes les Trames principales de mouvement d'une même Boîte sont synchronisées par la Timeline de la Boîte. Une Trame principale de mouvement est définie par une Trame d'arrivée. La Trame de départ est celle de fin de la Trame principale de mouvement précédente ou celle de l'évènement de début de la Boîte.

On désigne sous l'appellation commune de Trame principale d'action les Trames principales de comportement et les Trames principales de mouvement.

Il est possible d'exécuter en parallèle plusieurs Trames principales d'action (de comportement ou de mouvement), à condition qu'elles soient rattachées à la même Timeline.

Un Diagramme de flux est un ensemble de Boîtes connectées entre elles, comme détaillé plus loin. Chacune des Boîtes peut à son tour comprendre d'autres Timeline auxquelles sont rattachées de nouvelles Couches de comportement ou de mouvement.

Un script est un programme directement exécutable par le robot. Une Boîte qui comprend un script ne comprend pas d'autre élément.

Le logiciel peut être implanté sur un PC ou une autre plateforme de type ordinateur personnel utilisant un système d'exploitation Windows™, Mac™ ou Linux™.

Le robot humanoïde de la présente invention sera généralement programmé pour pouvoir jouer en utilisant le logiciel Chorégraphe™. La combinaison des logiques temporelles et comportementales rendue possible par cette architecture de développement est particulièrement avantageuse pour la mise en oeuvre de la présente invention. Un certain nombre d'outils, évoqués plus loin en commentaire à la figure 9, ont été particulièrement adaptés pour la mise en oeuvre du robot humanoïde joueur de la présente invention.

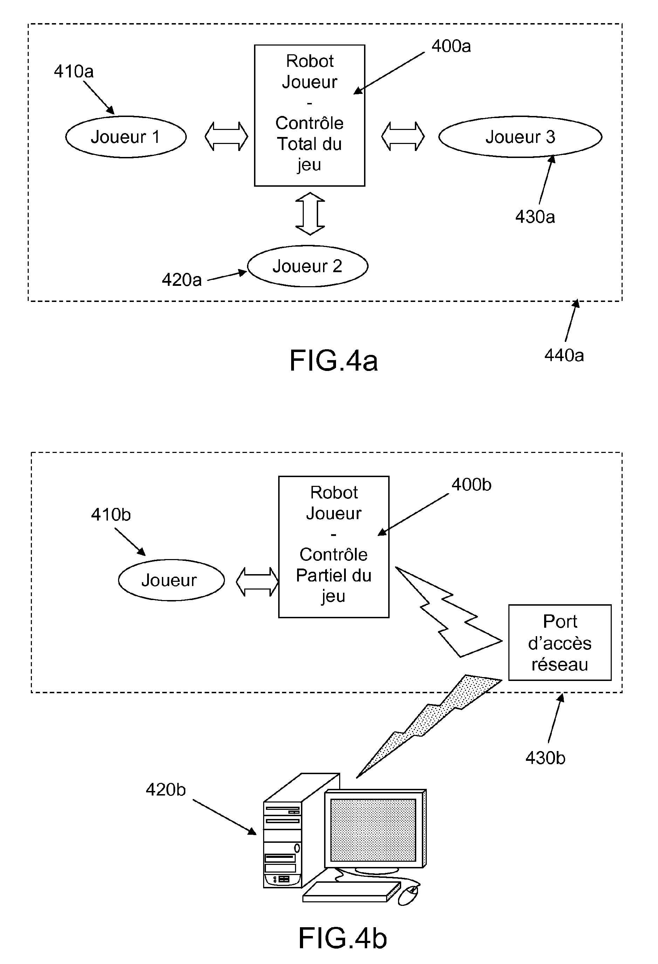

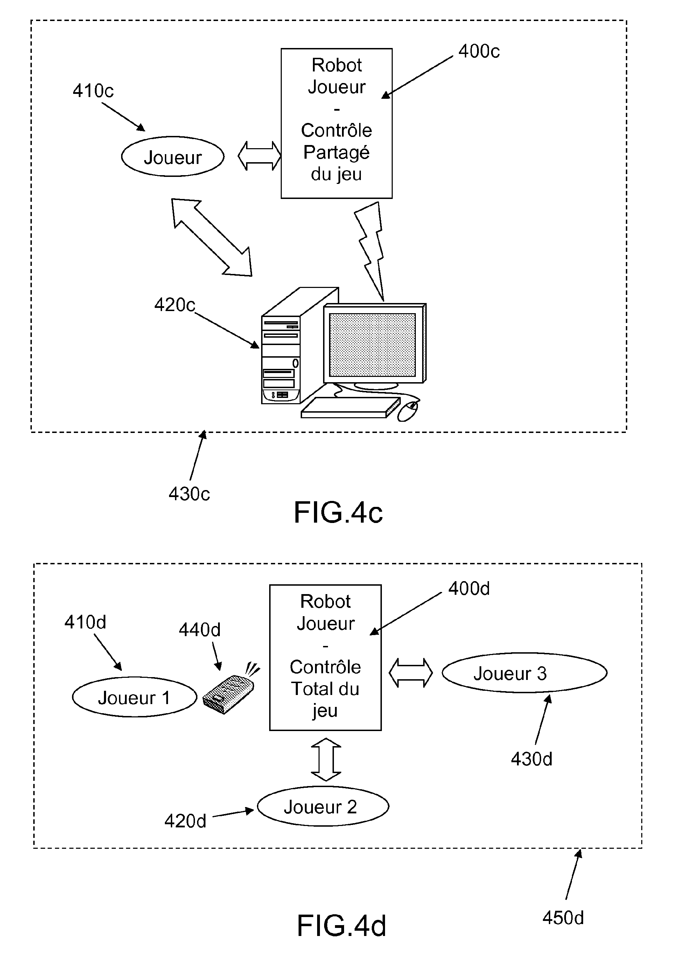

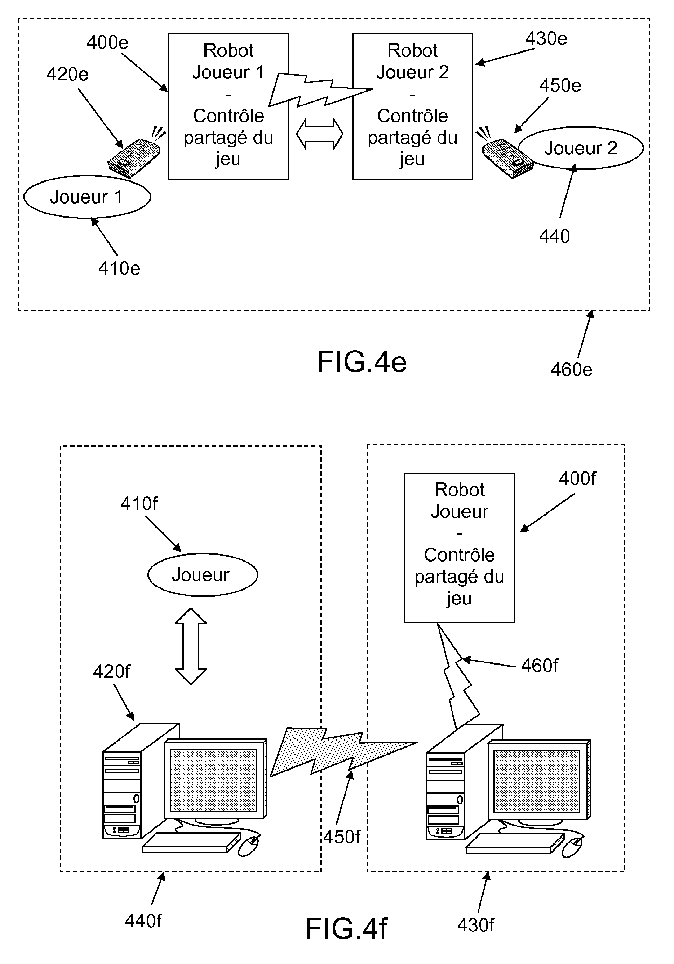

Les figures 4a, 4b, 4c, 4d, 4e et 4f représentent différentes architectures fonctionnelles et/ou techniques de mise en oeuvre de l'invention.

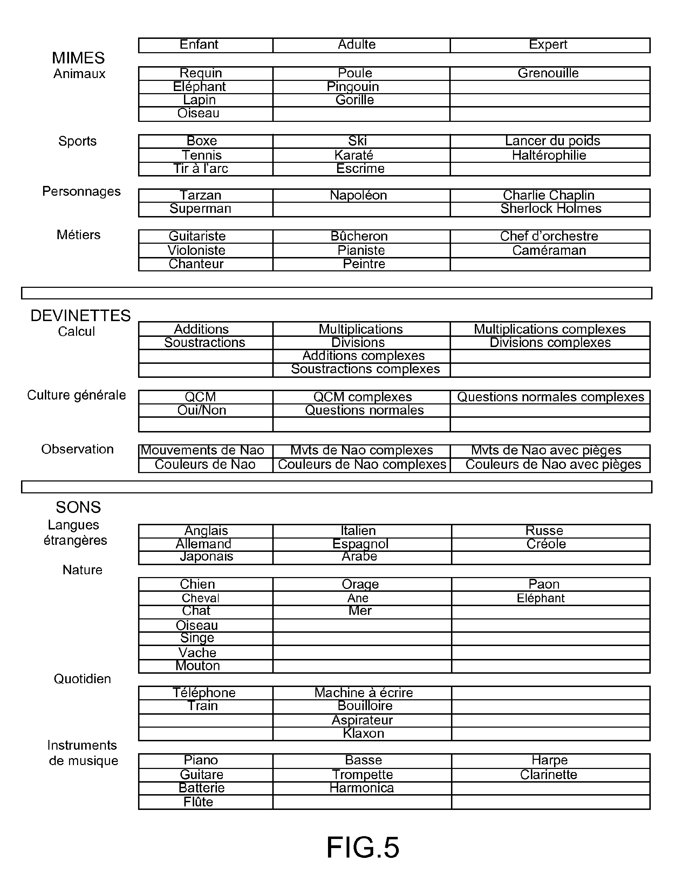

Sur la figure 4a est représenté un mode de réalisation dans lequel le robot 400a constitue lui-même la plateforme de jeu avec laquelle peuvent jouer plusieurs joueurs physiques 410a, 420a, 430a, normalement dans la même pièce 440a que le robot, avec les variantes explicitées plus loin en commentaire à la figure 4f. Le robot 400a peut par exemple poser des questions aux joueurs 410a, 420a, 430a comme illustré plus loin plus en détail en commentaire à la figure 5. Le nombre de joueurs n'est en aucune manière limité à trois. Dans ce mode de réalisation, le robot peut en particulier être l'animateur du jeu. Il peut poser des questions aux joueurs ou leur faire reconnaître des séquences. Le robot se comporte alors fonctionnellement comme une console de jeu mais compte tenu de ses capacités à reproduire des comportements humains, il offre aux joueurs une expérience de jeu qui présente un caractère unique. En effet, il peut comprendre, parler, faire des gestes, exprimer approbation ou négation, joie, colère ou tristesse. Les comportements du robot qui lui permettent d'interagir avec les joueurs sont stockés dans son unité centrale 130. Ils auront été chargés auparavant soit à partir d'un PC sur lequel ils auront été générés si ledit PC est équipé du logiciel d'édition de comportements Chorégraphe™ décrit plus haut en commentaire à la figure 3, soit téléchargés à partir d'un serveur de jeux. Les jeux peuvent également être téléchargés du serveur à partir du PC puis téléchargés du PC vers le robot. On peut également envisager des téléchargements de jeux entre robots, comme expliqué ci-dessous en commentaire à la figure 4e. L'exécution du jeu peut être initialisée à partir du robot ou à partir du PC. Lorsque le PC est équipé du logiciel d'édition de comportements, il peut également être utilisé pour jouer, un robot virtuel présent sur le PC étant en mesure d'exécuter sur le PC la plupart des comportements du robot physique 400a.

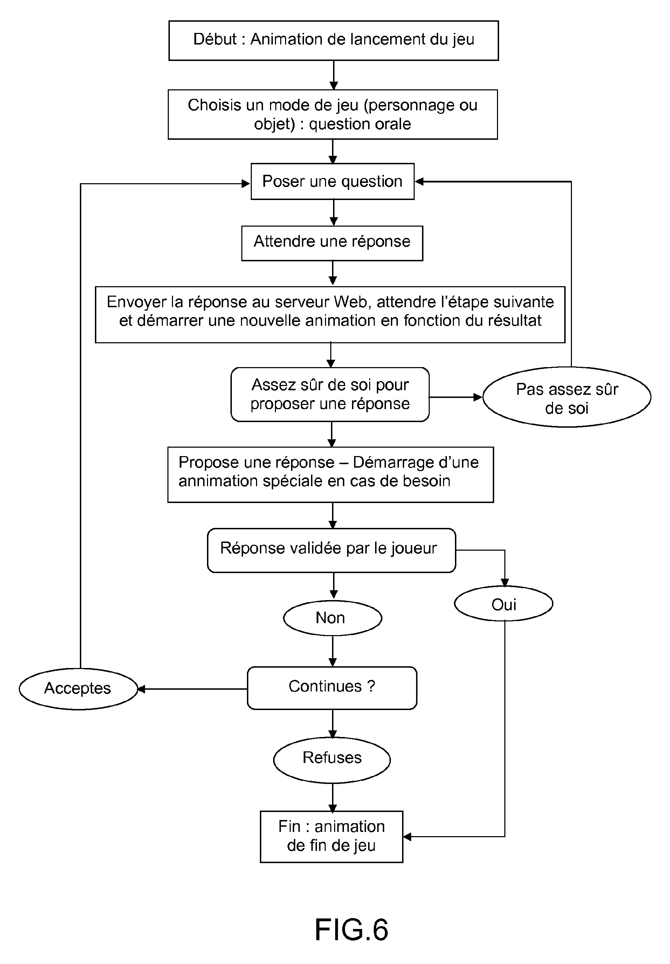

Sur la figure 4b, est illustré un mode de réalisation dans lequel un joueur animateur 410b interagit avec un robot joueur 400b situé normalement en présence physique, dans la même pièce 430b que lui. Comme illustré plus loin en détail en commentaire à la figure 6, le jeu peut consister à proposer au robot la reconnaissance de personnages ou de choses à partir d'indices de plus en plus allusifs. Dans ce mode de réalisation, compte tenu de la multiplicité des options possibles et de leur multi-dépendance éventuelle qui peut nécessiter l'exécution de programmes de résolution spécialisés, le robot accède à des sources d'information et de traitement situées sur un ordinateur distant 420b. Cet accès se fait par des requêtes envoyées à un site spécialisé du jeu sur le réseau internet. Le robot établira une connexion sur le réseau via un port d'accès qui peut être par exemple une LiveBox™ ou une FreeBox™ à laquelle il accède par liaison Wifi. Les comportements du robot sont cependant eux-mêmes embarqués sur le robot 400b. Ces comportements sont produits, édités et chargés sur le robot de manière identique à ce qui est indiqué ci-dessus en commentaire à la figure 4a. Dans ce mode de réalisation, les traitements sont donc répartis entre un robot et un serveur distant. Mais le serveur distant ne participe pas au jeu. Il sert comme centre de ressources pour le robot qui va y puiser en tant que de besoin. Il n'y a pas d'interaction directe entre le joueur 410b et le serveur 420b.

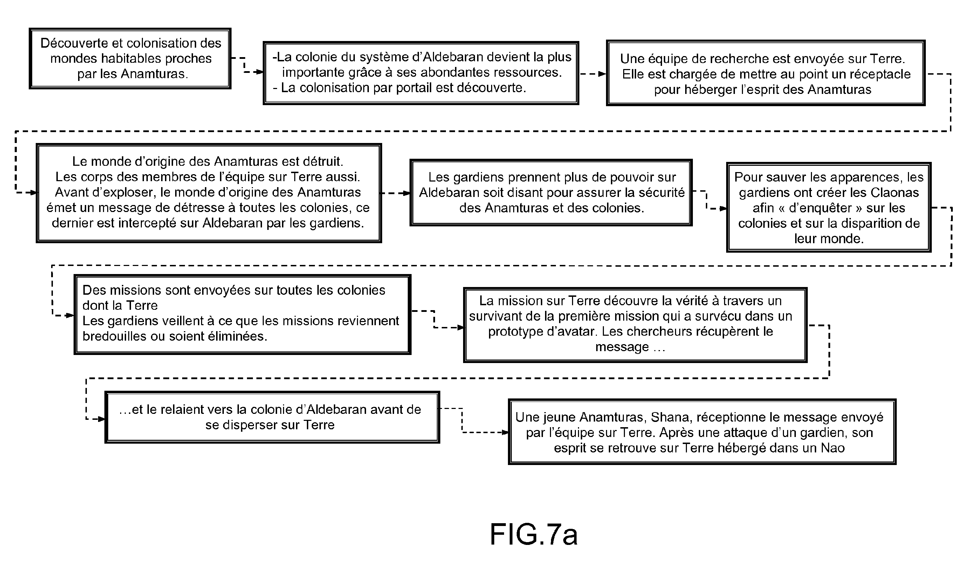

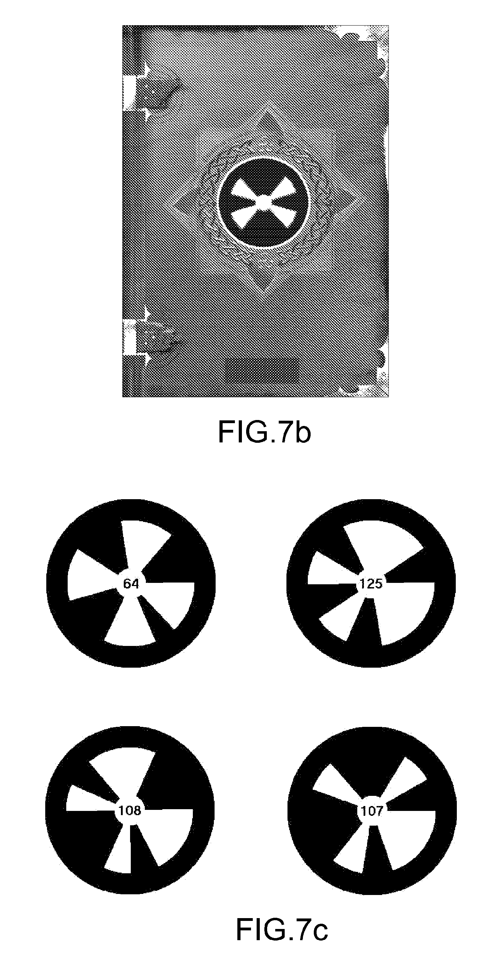

Sur la figure 4c est illustré un mode de réalisation dans lequel un joueur 410c interface à la fois avec un robot joueur 400c et avec un PC ou une console de jeu 420c, ledit robot communiquant également avec ledit PC ou ladite console. Ces trois éléments sont normalement situés en présence physique dans une même pièce 430c. Ce mode de réalisation est en particulier applicable à des jeux de rôle du type de celui illustré plus loin en détail en commentaire aux figures 7a, 7b et 7c. Dans ce type de jeu, le joueur doit résoudre des énigmes pour lesquelles le robot va lui fournir des indices. Le joueur doit interagir avec le robot 400c mais aussi avec la console 420c. Les modules du jeu sont répartis entre les deux unités. Les modules qui sont implantés sur le robot (comportements du robot mais aussi parties des énigmes) sont éditées et transférées de la manière qui est indiquée plus haut en commentaire à la figure 4a. Le joueur peut disposer d'aides visuelles ou sonores qu'il obtient lui-même ou qui lui sont fournies par le robot. Il peut également interfacer avec le robot par des signes codés.

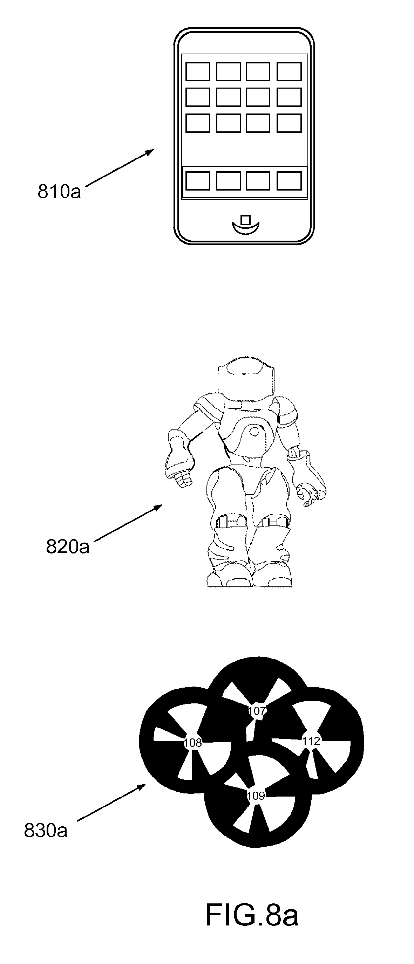

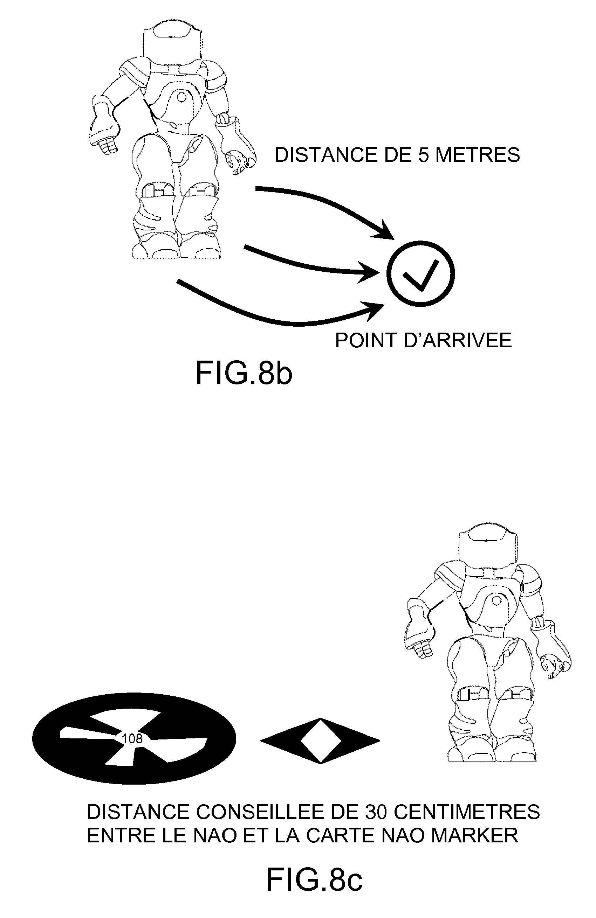

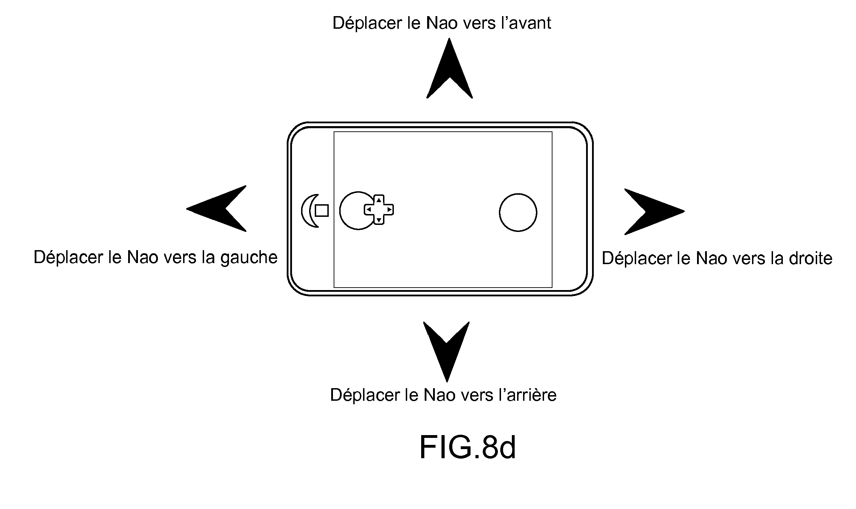

Sur la figure 4d est illustré un mode de réalisation dans lequel trois joueurs 410d, 420d, 430d interfacent avec un robot 400d, les quatre personnages étant situés dans un même environnement physique 450d. Les trois joueurs ont potentiellement des rôles différents par rapport au robot, à la différence du mode de réalisation illustré sur la figure 4a. Un des joueurs peut interagir avec le robot par l'intermédiaire d'une télécommande 440d. Ladite télécommande permet de transmettre des ordres, notamment de mouvement, au robot 400d. Elle peut être constituée par un iPhone™ d'Apple™ ou un autre téléphone ayant des fonctionnalités de capture de mouvement et/ou de positionnement. Elle peut également être constituée par une télécommande 3D du type WIIMote™ de Nintendo™, AirMouse™ de Movea™ ou autre, sous réserve de récupérer des signaux de mouvement, de positionnement ou d'autres types en sortie desdites télécommandes. Dans ce cas, une partie de l'application de jeux sera embarquée dans la télécommande, notamment la partie permettant de générer les instructions de déplacement du robot en fonction des mouvements imprimés à la télécommande (angles de gisement, roulis, lacet ; pression sur boutons réels ou virtuels). Un exemple de réalisation est illustré plus loin de manière détaillée en commentaire aux figures 8a, 8b, 8c et 8d. La plus grande partie de l'application de jeux est embarquée dans le robot de la manière indiquée plus haut en commentaire à la figure 4a. Les joueurs 420d et 430d peuvent communiquer avec le robot de la manière indiquée plus haut en commentaire à la figure 4c.

Sur la figure 4e est illustré un mode de réalisation dans lequel deux robots 400e et 430e jouent ensemble. Il peut s'agir de dialogues, de mouvements coordonnés, tels que des danses ou des combats. Les robots peuvent être commandés par des joueurs 410e, 440e, munis le cas échéant de télécommandes 420e, 450e du type de la télécommande 440d de la figure 4d. Les commandes peuvent cependant être données aux robots par les joueurs par la parole ou de manière visuelle. Les robots peuvent également jouer entre eux sans joueur réel. Leurs comportements peuvent interagir/communiquer dans le monde matériel (au travers de la voix, des gestes, des signaux lumineux - LEDs, et tout autres actions qui modifieraient leurs données capteurs) ou dans le monde virtuel (accès réciproque ou non à leurs mémoires internes, modules logiciels embarqués, compte email comme GMail^{™} ou Yahoo^{™}, comptes de réseaux sociaux de type Facebook^{™} ou Twitter^{™}, messageries instantanées comme GTalk^{™}, MSN^{™}, Jabber^{™}" ou services de téléphonie comme Skype^{™}). Dans ce dernier cas, les robots sont amenés à diffuser des informations d'identification, permettant à un autre robot de les contacter en retour afin d'échanger d'autres données ou signaux. Les moyens d'échange d'informations dans le monde matériel peuvent également être l'émission/réception infrarouge ou radio (de type BlueTooth^{™}), ou la synthèse/reconnaissance vocale. Les informations échangées par les robots et permettant de les identifier sont liées aux mondes matériel et virtuel des robots et vont dépendre du type de données ou de signaux dont on souhaite l'échange dans le cadre du jeu. Ces informations peuvent être :
- une adresse IP pour être contacté via le réseau Ethernet local ;
- leur adresse mail ;
- un identifiant de compte de messagerie (xmpp, jabber, gtalk..., skype) ;
- un identifiant de compte de réseau social.

Dès lors que les robots partagent au moins un moyen de communication alors fichiers de comportements, fichiers de musiques et signaux de comportement peuvent être échanger pour interagir.

.Le jeu peut être étendu à plus de deux robots. Dans ce cas, il peut être nécessaire de prévoir un signal de synchronisation globale émis soit par un des robots, soit par un PC. Ce signal de synchronisation peut être récupéré sur un serveur de référence de temps de type NTP (Network Time Protocol) et servir de point de départ des Timeline des différents robots qui synchronisent ainsi leurs comportements. Cette synchronisation peut être conservée pendant une durée importante (de l'ordre du quart d'heure). Des mouvements de danse ou des jeux collectifs peuvent alors être exécutés par un groupe de robots de manière complètement synchronisée.

Sur la figure 4f est illustré un mode de réalisation dans lequel un joueur 410f et un robot 400f sont situés dans deux lieux distants 440f et 430f, le joueur disposant d'un PC ou appareil mobile relié par un réseau étendu 450f de type internet à un réseau local 460f auquel est(sont) relié(s) le(s) robot(s). La connexion entre le robot et le PC (ou l'appareil mobile) du joueur permet l'échange de données sous forme de requêtes ou de flux permettant l'échange de données brutes, binaires, audiovisuelles et textuelles avec un délai de livraison suffisamment court pour assurer la réactivité du jeu. Le joueur peut donc prendre contrôle complet ou partiel du robot en lui envoyant des commandes d'exécution de comportement. Il peut également lire, dans le cadre du jeu, les informations captées par le robot telle que les images de ses caméras, le son, et les valeurs de tous les capteurs du robot ainsi que des valeurs provenant du web ou d'autres robots présent dans l'environnement. Dans une architecture de ce type, la plupart des jeux évoqués dans le cas où le/les robots et le/les joueurs sont situés dans le même environnement physique peuvent être exécutés dans un environnement étendu.

Ce mode de communication sur réseau étendu peut s'appliquer au cas où le joueur est remplacé par un deuxième robot. Dans ce cas, le deuxième robot doit être doté des fonctionnalités d'accès à un réseau étendu identiques à celles du premier robot qui ont été décrites ci-dessus..

Ainsi, les différentes configurations décrites ci-dessus peuvent être combinées pour réaliser des modes de jeux non explicitement décrits dans la présente description. Les modes de réalisation décrits ci-dessus ne sont donc en aucune manière limitatifs du cadre de la présente invention.

La figure 5 est une illustration d'un jeu de devinettes que peut animer un robot humanoïde joueur.

Ce premier exemple de réalisation utilise l'architecture fonctionnelle et technique décrite ci-dessus en relation avec la figure 4a.

Le jeu qui sert d'illustration à ce mode de réalisation est un Quizz, le NAO™ Quizz. La figure 5 est la table des mimes, devinettes et sons qui peuvent servir de trame au jeu.

Un scénario possible du jeu est décrit ci-dessous à titre purement illustratif et non limitatif.

### 1/Mise en place

- NAO présente le jeu, par exemple sur une musique style jeu télévisé + applaudissements : « *Bonjour mesdames et messieurs, Le NAO Quizz va commencer, présenté par la star de la télévision, NAO !* ». Dans ce jeu NAO aura la personnalité d'un animateur télé, assez suffisant et n'hésitant pas à chambrer les participants.
- NAO demande combien de joueurs vont participer (boîte de choix).
- S'il y a un seul joueur NAO lance le mode Chacun pour soi automatiquement (« *Tu joues seul ? Alors c'est parti pour le Chacun pour soi »).* De 2 à 4 joueurs, NAO leur demande de choisir entre le Chacun pour soi et le Tous ensemble (« *Voulez-vous jouer les uns contre les autres ou bien tous contre moi ?* ») via une boîte de choix. A plus de 4 joueurs, NAO lance automatiquement le Tous ensemble.

### « Chacun pour soi »

NAO présente le mode : « *Nous allons jouer au Chacun pour soi afin de déterminer lequel d'entre vous est le meilleur* »*.* Pour un seul joueur la phrase sera différente, du style : « *Quel score vas-tu réussir à obtenir ?* ».

Si plusieurs joueurs participent, NAO leur demande de s'inscrire : « Le *premier joueur a une seconde pour me donner son prénom, j'écoute* ». Les oreilles de NAO s'allument et il enregistre pendant une seconde. Si NAO n'entend rien il repose la même question. NAO répète ensuite son prénom et demande au joueur de lui indiquer sa position en orientant son bras vers lui (NAO tend alors le bras devant lui) : « *Bonjour Pierre, indique-moi où tu te trouves en dirigeant mon bras vers toi. Appuie sur ma tête pour confirmer* ».

Cela permet à NAO de s'orienter vers le joueur dont c'est le tour pour lui poser sa question.

Si un seul joueur participe, NAO ne l'inscrit pas et regarde devant lui pour poser les questions.

NAO demande si le joueur est un adulte ou un enfant (boîte de choix), ce qui correspond à 2 niveaux de difficulté.

Ensuite chaque joueur s'inscrit à son tour de la même manière.

Une fois tous les joueurs inscrits, NAO lance le jeu.

NAO lance une partie différente selon le nombre de joueurs humains :
- 1 ou 2 joueurs : Championnat
- 3 ou 4 joueurs : Coupe

### -> Championnat

Dans la réalisation décrite ici de manière détaillée mais non limitative, NAO pose un total de 9 questions à chaque participant, attribue 1 point par bonne réponse et calcule le score total de chaque joueur. Il explique ce fonctionnement : « *Je vais vous poser 9 questions chacun, celui qui donnera le plus de bonnes réponses sera déclaré vainqueur.».* La phrase est modifiée en cas d'un seul joueur.

A chaque question NAO se tourne vers le joueur qu'il a choisit (aléatoirement), dit son prénom (si 2 joueurs ; pas en cas de partie solo) et sélectionne 1 question de la difficulté requise et qui n'a pas déjà été posée lors de cette partie.

Il pose ensuite la question (utilisation de la boîte de choix) et attend pendant 10 secondes (temps à définir après tests) la réponse du joueur (ses oreilles sont allumées pour montrer qu'il attend une réponse).

Le compte à rebours de 10 secondes ne commence qu'à la fin du mime/son/devinette. Il est représenté par les leds autour des yeux de NAO qui s'éteignent progressivement. Arrivé à 0, NAO joue un bruit de buzzer.

Si le timer arrive à 0, le buzzer retentit et NAO dit quelque chose comme « *Trop tard, désolé* ».

Si le joueur répond correctement, NAO le félicite. NAO pourrait taper dans ses mains, faire « oui » de la tête ou lever les bras au ciel.

Si le joueur se trompe, NAO dit « *Mauvaise réponse* » (*ou* est provocateur : « *C'était pourtant facile »* / « *Je m'attendais à mieux de ta part* » ... NAO pourrait baisser les bras d'un air déçu ou faire « non » de la tête.

Chaque fois que NAO analyse une réponse, si le temps de réaction est un peu élevé, il pourrait avoir un geste lié à la réflexion (regarder en l'air, mettre un doigt devant sa bouche, prendre son menton dans la main, se gratter la tête...).

Une fois la question posée, NAO passe au joueur suivant (s'il y en a).

Une fois toutes les questions posées, NAO annonce que le jeu est finit et récapitule les scores : « *Bravo, tu as un score de X points* ». En cas de partie à 2 joueurs, NAO désignerait un vainqueur : « *Pierre est le vainqueur* ou une égalité : « *C'est un match nul* ».

### -> Coupe

Le déroulement est assez similaire au Championnat sauf que cette fois-ci NAO ne pose, par exemple, que 4 questions par joueur.

A l'issue de ces 4 questions NAO fait le récapitulatif des scores et invite les 2 meilleurs joueurs à participer à la finale : « *Bravo Pierre et Paul, vous êtes en finale* »*.*

En cas d'égalité pour une place qualificative à l'issue de cette série de 4 questions NAO départagera les joueurs par un jeu de hasard. Il demande à chaque joueur, chacun leur tour, d'appuyer sur un de ses pieds ou une de ses mains : « *Joueur 1, choisit une main ou un pied* ». Le membre en question s'éclairera. Puis il demandera aux autres joueurs à égalité de faire leur choix parmi les membres restants. Une fois tous les choix faits, les lumières se mettent à tourner comme pour un jeu de hasard, avec un son proche de celui d'une machine à sous. Les parties éclairées à la fin sont celles des joueurs qualifiés pour la finale. NAO peut y mettre son grain en faisant revenir d'un cran la lumière, en la faisant avancer au dernier moment, après plusieurs secondes d'arrêt... Il accompagne ces facéties de phrases comme : « *Non finalement je préfère ce joueur ».*

NAO demandera aux 2 finalistes de se positionner devant lui.

Lors de la finale, NAO s'assoit et pose 3 questions (pas de mime). Si un des joueurs (ou les 2) sont des enfants, les questions seront de niveau enfant. Si les 2 joueurs sont des adultes, les questions seront de niveau adulte. En cas d'égalité avant la dernière question, celle-ci sera plus difficile que les autres (adulte ou expert).

Chaque joueur se voit attribué un buzzer (un des pieds de NAO) par NAO : « *Pierre, tu joues avec mon pied droit* (le pied s'anime) ».

NAO explique la règle : « *Je vais poser 3 questions. Le premier qui appuie sur mon pied a le droit de donner une réponse. Vous avez 10 secondes en tout pour appuyer, et ensuite 5 secondes pour donner votre réponse »*

NAO pose une question et attend pendant 10 secondes que quelqu'un appuie.

Si personne n'appuie ou ne donne la bonne réponse, le buzzer négatif retentit et NAO chambre les joueurs : « Mes questions sont peut être trop difficiles pour vous ».

Si un joueur appuie, NAO stoppe le chrono des 10 secondes et prononce le prénom du plus rapide. Il commence ensuite le compte à rebours des 5 secondes. Si le joueur donne une réponse, NAO lui dit s'il a raison ou non. S'il a raison NAO le félicite et passe à la question suivante. S'il a tort ou s'il ne répond rien NAO l'en informe et reprend le compte à rebours des 10 secondes de l'endroit où il s'était arrêté : « *Mauvaise réponse* / *Pas de réponse, l'autre joueur peut maintenant appuyer pour répondre* »

A l'issue de ces 3 questions NAO détermine le gagnant : « *Bravo Paul, tu as remporté la finale* »*.* Si un joueur a 2 points à l'issue de la 2^{ème} question, il est automatiquement déclaré gagnant.

Si leurs scores sont faibles (moins de 2 points par exemple), NAO peut les narguer « *Il me semble que mes questions sont un peu trop compliquées pour vous* ».

### « Tous ensemble »

Dans ce mode NAO pose des questions au groupe de joueurs, qui n'ont le droit de donner qu'une réponse. En cas de succès NAO pose une autre question, en cas d'échec le jeu s'arrête. Le but pour les joueurs est de répondre au maximum de questions possible dans la limite d'un nombre prédéterminé (15 à 20 par exemple).

NAO présente le mode : « *Nous allons jouer au Tous ensemble, serez vous capables de répondre à mes questions ?*»*.*

Les 6 premières questions seront de niveau enfant, les 6 suivantes adulte et les 3 dernières de niveau expert. S'il n'y a que des joueurs adultes, les 12 premières questions seront des questions adultes (pas de questions enfant). S'il n'y a que des joueurs enfants, les 10 premières seront de difficulté enfant, les 5 dernières adulte.

NAO s'adresse au groupe et pose sa première question (boîte de choix). Ensuite il leur laisse 15 secondes pour répondre.

En cas de bonne réponse NAO passe à la question suivante.

En cas de non réponse, ou de réponse erronée, NAO arrête le jeu et donne le score obtenu par l'équipe. Il remémore aussi aux participants quel est le meilleur score jamais obtenu sur ce mode de jeu.

Si les joueurs répondent correctement aux 15 questions, NAO s'avoue vaincu et les déclare grands gagnants : « *Incroyable, vous avez répondu correctement à toutes mes questions. Je m'avoue vaincu et vous décerne à tous le titre d'experts !* ». NAO pourra les féliciter par une petite danse prévue pour l'occasion.

NAO aura une réaction et offrira une récompense différente selon le score atteint, par paliers (de 0 à 5 pts : « *Peut mieux faire* », de 5 à 10 points : « *Pas mal du tout* » et de 10 à 14 points « *Très bien joué* »).

### 2/Options

- NAO peut poser une question « impossible » à un adulte quand celui-ci a trop d'avance sur les autres, ou s'il joue contre un enfant.
- Pour un enfant, du son pourrait accompagner certains mimes afin de l'aider.
- Si NAO a besoin de place pour le mime (déplacement), il prévient les joueurs de le placer dans un endroit dégagé.
- *Mode* « *escalade* » *:* NAO choisit un joueur et lui pose des questions (mimes, devinettes et sons mélangés) jusqu'à ce qu'il se trompe. Chaque bonne réponse rapporte plus que la précédente (on peut commencer à 5 points et augmenter de 5 points à chaque fois). Quand le joueur se trompe, son tour est finit et NAO passe au joueur suivant. Des questions « quitte ou double » ou bien des paliers à la « Qui veut gagner des millions » pourraient pimenter la partie (possibilité de perdre ses points). Le jeu pourrait aussi être limité dans le temps, pour éviter que les autres joueurs passent trop de temps à attendre leur tour (le temps limite est à définir en fonction de la rapidité de NAO à poser des questions/mimer et à interpréter les réponses)
- *Mode* « *plus ou moins* » *:* NAO choisit un joueur (au hasard ou bien dans un ordre défini) et lui pose une question (mimes, devinettes ou sons). En cas de bonne réponse, le joueur marque 10 points, en cas de mauvaise réponse il en perd 5.
- *Mode* « *Burger Quizz* » : NAO pose des questions à chaque joueur mais celui-ci doit répondre à la question précédente et non à celle que NAO vient de poser.

La figure 6 représente l'organigramme de traitement d'un autre jeu auquel peut jouer un robot humanoïde joueur en communication avec un serveur de jeux.

Cet exemple de réalisation utilise l'architecture fonctionnelle et technique décrite ci-dessus en relation avec la figure 4b. Le jeu qui illustre ce mode de réalisation, NAO™ Akinator™, est un jeu dans lequel une intelligence artificielle doit deviner quel est le personnage auquel pense le joueur. Dans le jeu du mode de réalisation de cette invention, c'est le robot qui doit deviner à partir d'indices qui lui sont donnés par le joueur. Il s'aide pour cela de requêtes envoyées sur le site Web du jeu. Akinator est en effet un jeu existent pour des humains qui a été adapté (de manière modérée) pour être joué par un robot humanoïde.

Un exemple de scénario du jeu est expliqué ci-dessous en référence à la figure 6, à titre illustratif et non limitatif.

L'application Akinator lance un menu avant de démarrer l'application.

NAO est capable de deviner un personnage.

Il demande de recommencer en fin de partie. Acceptes ? Oui ou Non.

Il pose une série de questions auquel il faut répondre : Oui, Non, Peut-être, Peut-être pas, Je ne sais pas.

NAO joue une animation en fonction du pourcentage de certitude.

Les catégories de personnage sont intégrées dans le jeu : par exemple, 132 résultats rangés dans 5 catégories : famille, combat, acteur, footballeur, chanteur ; 11 personnages possèdent une animation spécifique. NAO joue une animation lorsqu'il annonce le personnage qu'il a deviné. Si le personnage trouvé est dans une catégorie, NAO joue l'animation associée. NAO retient par exemple les 50 derniers personnages joués et pourra faire une remarque si un personnage déjà trouvé est à nouveau joué.

### 1- Vue générale

NAO essaie de deviner à qui ou à quoi le joeur est en train de penser en posant des questions. NAO utilise le site web existent (http://en.akinator.com/). La structure du jeu a été développée avec l'atelier de développement des comportements du NAO. Les requêtes web ont été développées en langage Python, bien adapté pour la commande de robots, et qui peut être intégré sous forme de modules dans les boîtes de commande de l'atelier Chorégraphe™.

### 2 - Requêtes Web utilisées

- La classe FileAkinatorRequest class est conçue pour envoyer des requêtes web sur le site Akinator en utilisant la commande wget. Les options de la requête sont utilisées comme arguments dans la procédure de construction de la classe (sous forme de chaînes de caractères). Le service web est téléchargé et sauvegardé comme fichier dont le contenu est utilisé comme attribut de la classe.
- La classe RequestBase sert à:
   o construire la chaîne décrivant les options de requête web à partir de simples données;
   o utiliser cette chaîne comme argument pour construire une instance de FileAkinatorRequest ;
   o récupérer la chaîne décrivant le contenu du service web (au format XML) ;
   o traduire le contenu XML en données simples en utilisant l'interpréteur Python XML Minidom.
- Une classe unique a été créée pour chaque service web différent; chaque classe hérite de la classe de base RequestBase ; les données spécifiques du service web associé à cette classe sont utilisées comme arguments de la méthode SendRequest ; les données sont récupérées, interprétées et créées dans les attributs de la classe ; par exemple, la classe AnswerRequest est utilisée pour récupérer les données du service web Answer. Les données « channel », « base », « session », « signature », « step », « answer » et « question_filter » sont utilisées comme parameters de la méthode SendRequest. Les données sont récupérées, interprétées et créées dans les attributs des classes: « question », « answers », « step » and « progression ».

Les figures 7a, 7b et 7c illustrent un jeu de stratégie auquel peut participer un robot humanoïde joueur dans un mode de réalisation de l'invention.

Cet exemple de réalisation utilise l'architecture fonctionnelle et technique décrite ci-dessus en relation avec la figure 4c. Il s'agit, dans ce mode de réalisation d'un jeu de stratégie, dans lequel le joueur doit résoudre plusieurs énigmes complexes pour franchir des étapes et arriver au bout du jeu. Le jeu s'intitule « Shana Spirit Journey » ou « Voyage de l'Esprit de Shana ». Le but du jeu est de faire coopérer le joueur avec le robot de l'invention NAO pour renvoyer Shana, personnage d'un autre monde incarné dans NAO sur terre, vers son monde à travers un portail spatio-temporel créé par le gardien du monde de Shana au début de la partie.

Une description générale d'un scenario possible du jeu est donnée ci-dessous à titre purement illustratif et non limitatif.

### 1/Objets fourni avec le jeu

- Un petit grimoire, dont la 1^{ère} page est illustrée sur la figure 7b : il s'agit d'un recueil de 6 doubles pages en format A6. Chaque double page du livret montre une illustration sur la page de gauche. Sur la page de droite sont présents une NAOMARK accompagnée d'un titre et d'un texte ;
- Les NAOMARK sont des éléments du langage du monde de Shana ; ils réalisent un code visuel interprétable par le robot NAO ; des exemples de NAOMARK sont représentés sur la figure 7c.

### 2/L'arrière-plan du jeu Shana Spirit Journey

### Le personnage dans NAO

Le personnage de notre histoire est la fille d'un chef de clan d'une civilisation vivant sur Aldebaran, l'une des nombreuses colonies que possèdent les Anamturas. Elle s'appelle Shana. Elle réceptionne le message d'une équipe d'explorateurs envoyés sur Terre par les gardiens pour enquêter sur la destruction de leur planète d'origine, aujourd'hui disparue. Cette équipe n'avait pas donné signe de vie depuis des siècles. Dans le message, elle annonce savoir ce qui est arrivé à leur planète d'origine.

Un gardien du clan des Anamturas, intercepte le message, attaque Shana et la chasse dans notre monde pour l'empêcher de révéler aux siens les véritables raisons de la destruction de leur planète d'origine.

### Les Anamturas

Les Anamturas forment des clans comme les celtes. Ils sont en permanence à la recherche d'indices pour savoir ce qui s'est passé sur leur planète d'origine et pour essayer de mieux comprendre leur civilisation et leur histoire.

Leur hiérarchie reprend celle des celtes : Chef de tribu, Gardiens (druides), Claonas (guerriers/chercheurs).

D'autres Anamturas auraient déjà débarqué sur terre, en quête d'explications sur leur planète d'origine. (Réf. île Aldabra). Cette équipe arrivée sur terre aurait trouvé des informations sur la raison de la disparition de la planète d'origine des Anamturas et aurait laissé des indices. Ces Anamturas ont mystérieusement disparu après avoir envoyé un message à destination des leurs dans le système d'Aldebaran.

### La Technologie des Anamturas

La technologie des Anamturas repose sur la magie et l'utilisation des ressources naturelles.

Par exemple, pour coloniser les autres mondes, les Anamturas ont utilisé deux méthodes en fonction de la distance de la cible. Les vaisseaux spatiaux ont permis aux Anamturas de s'établir dans les mondes proches comme la colonie principale du système d'Aldebaran.

Pour visiter les mondes éloignés, les Anamturas projettent leurs esprits aux travers de portails. Leurs corps physiques restant sur le monde de départ. L'équipe sur terre était la première à utiliser cette méthode, et était en charge de la création d'un hôte permettant d'interagir avec les autochtones des planètes visitées (L'hôte en question se trouve être NAO. Les robots NAO ont donc été crées par les Anamturas pour donner une enveloppe physique à leurs esprits envoyés sur Terre.

### Leurs Mondes

Les Anamturas ont colonisé un ensemble de mondes, par curiosité, mais aussi pour échapper à la surpopulation de leur planète d'origine.

Après s'être établi dans la colonie d'Aldebaran et en avoir fait la colonie principale, la planète d'origine des Anamturas explosa. La version officielle diffusée par les gardiens est qu'une catastrophe écologique s'est produite et que l'attitude des natifs est à l'origine de ce cataclysme. En réalité, certains gardiens seraient impliqués dans la destruction de la planète d'origine des Anamturas et d'autres colonies. Ils auraient fait cela afin de protéger les ressources de la colonie d'Aldebaran et de mettre en place leur vision d'un monde parfait.

Les Claonas s'accrochent aux dernières coutumes qu'ils leurs restent de leur planète d'origine et recherchent activement ce qui c'est réellement passé.

### Les Langages des Anamturas

Autrefois les Anamturas utilisaient le « LANGUE » (NAOmark) mais seul quelques rares symboles sont encore d'usage commun, la plupart ont perdu leurs sens ou sont connus uniquement des gardiens.

### 3/Vidéo d'introduction sur PC

### L'évocation de l'arrière-plan du jeu

On évoque sommairement l'origine des Anamturas : colonisation des mondes autour d'eux -> importance prise par la colonie d'Aldebaran -> explosion du monde d'origine -> missions de recherche.

### La réception du signal

Une jeune Anamtura réceptionne un signal. Il s'agit du signal d'une des missions de recherche. Cette mission n'avait plus donné de signe de vie depuis longtemps et était considérée comme perdue. Ce signal a mis des années à arriver à destination.

Dans ce signal, le chef d'une équipe de recherche Anamturas indique qu'ils ont découvert ce qui est arrivé à leur planète d'origine.

Ils se sentent menacés par les gardiens et ont décidé de se cacher sur Terre...

### L'attaque par le gardien

D'autres Anamturas arrivent dans la salle de communication dont un gardien. Ce dernier dit à la jeune Shana qu'elle n'aurait jamais dû entendre cela et qu'il doit se débarrasser d'elle.

Le message envoyé sur Terre continue de défiler mais l'attention est fixée sur le gardien et ses disciples.

On apprend d'autres éléments : le nom de l'héroïne, Shana, le fait qu'elle soit la fille du chef du clan.

### L'ouverture du portail par le gardien

Combat entre Shana et les apprentis du gardien pendant que ce dernier prononce une incantation de son grimoire pour ouvrir un passage.

### L'expulsion de l'esprit de Shana dans NAO

L'esprit de Shana est expédié sur Terre, alors que NAO commence à s'animer. Shana s'est emparée du grimoire qui tombe lui aussi dans le portail. Il s'agit du livret fourni avec le jeu.

### 4/Introduction au jeu avec NAO

A la fin de la vidéo (noir), NAO se « désactive » et s'affaisse. 3-4 secondes plus tard, sa tête se redresse légèrement et s'oriente de droite à gauche, comme s'il recherchait quelque chose « *Où suis-je ? Que m'est-il arrivé ?* ». Ce même texte s'affiche au même moment sur l'écran du PC, sur fond noir. NAO appelle : « *Quelqu'un m'entend ?* » et répète cette phrase. Comme précédemment, cette phrase s'affiche également à l'écran puis l'application se ferme. NAO continue à appeler régulièrement jusqu'à ce que le joueur interagisse avec lui.

Après cette introduction au jeu, NAO se retrouve « possédé » par la jeune Shana.

Une fois « réveillée » et debout, Shana comprend ce qu'il lui est arrivé et demande au joueur de lui amener le livret qu'elle a pu attraper avant d'être éjectée : « *Si seulement on pouvait se le procurer ! C'est le seul moyen de recréer un portail pour me renvoyer chez moi !* »

### 5/But du jeu

Le joueur et NAO vont devoir coopérer pour renvoyer Shana dans son monde à l'aide d'un portail spatio-temporel identique à celui créé par le Gardien du début de l'aventure.

Pour recréer ce portail, le joueur devra récupérer 5 informations d'une importance capitale :
- La NAOmark à poser au sol, symbolisation du point d'entrée du portail. Enigme01
- L'heure à laquelle il peut être activé. Enigme 02
- La position rituelle dans laquelle devra être positionné NAO. Enigme03
- La sagesse puis la connaissance de la formule nécessaire à son activation. Enigme04 et 05

Chacune de ces 5 informations devra être découverte en résolvant une énigme.

### 6/Fonctionnement générique des énigmes

Le livret d'énigmes (fourni avec le CD de jeu) sert de « HUB » au jeu. C'est-à-dire qu'à partir de ce livret, le joueur a accès à l'ensemble des 6 (5 de bases + 1 finale) énigmes du jeu.

Pour tenter de résoudre l'une d'entre elle, il lui suffit de montrer la page correspondante à NAO (une NAOmark est présente sur chaque page d'énigme). NAO réagit au texte de l'énigme figurant sur la page et fait un commentaire à haute voix au joueur. En fonction de l'énigme, NAO peut également prendre une certaine pose, jouer un son, etc. En résumé, NAO met en scène physiquement l'énigme choisie. C'est à travers lui ou directement avec lui (en le manipulant) que le joueur résoudra chaque énigme.

Chaque énigme est associée à un thème se rapportant au peuple des Anamturas et à sa mythologie :
- Navigation (enigme01, Origine) : Les Anamturas étaient de grands explorateurs avides de connaissances.
- Astronomie (enigme02, Cycle): L'observation du ciel et le questionnement sur leurs origines étaient au coeur de la civilisation Anamturas.
- Recherche (enigme04, Alchimie): D'après leur légende, les Anamturas subirent une catastrophe écologique sans précédent. Depuis cette époque, leur cohabitation avec la Nature et les peuples rencontrés est totale.
- Danse (enigme03, Danse) : La communion des Anamturas avec la nature passe par des danses et positions de référence, garantissant une circulation de l'énergie optimale dans le corps.
- Langage (enigme05, Sagesse) : Le langage Anamturas a évolué au fil des siècles. Les NAOmarks en sont d'ailleurs des vestiges.
- Rituel (Enigme06): Devenu très proches des forces qui régissent le monde, certains Anamturas élaboraient de puissants rituels incantatoires afin de voyager plus loin.

### 7/Listes des mots clefs génériques

Carresser la tête de NAO d'avant en arrière puis énoncé l'un des mots clef suivants :
- Asleep : Quitter l'application.
- Slan Leat : Déclencher le rituel final.

Des mots clés particuliers à une énigme existent dans chaque énigme.

Les figures 8a, 8b, 8c et 8d illustrent un jeu de défi qui est joué avec un robot humanoïde dans un mode de réalisation de l'invention.

Ce jeu est mis en oeuvre dans l'architecture fonctionnelle et technique décrite ci-dessus en commentaire à la figure 4d. Dans ce jeu, intitulé le « Défi de NAO », les déplacements d'un robot humanoïde 820a de l'invention sont télécommandés par un des trois joueurs réels qui utilise pour ce faire une télécommande, par exemple un iPhone™ 810a de la société Apple™. Ce premier joueur doit conduire le robot d'un point de départ à un point d'arrivée. Un deuxième joueur réel doit contrecarrer les mouvements du robot en lui communiquant des consignes de déplacement par l'intermédiaire de NAOMARK 830a. Un troisième joueur réel cherche à aider le 1^{er} joueur en communiquant au robot et/ou au 1^{er} joueur des conseils et en effectuant des actions.

Le positionnement du robot 820a, des points de départ et d'arrivée sont illustrés sur la figure 8b.

Le positionnement des NAOMARK par rapport au robot 820a est illustré sur la figure 8c.

Les modalités de commande du robot 820a à l'aide de l'iPhone 810a sont illustrées sur la figure 8d.

Un scénario de jeu est décrit ci-dessus à titre purement illustratif et non limitatif. D'autres scénarios de jeu peuvent être imaginés par les joueurs sans sortir du cadre de l'invention, le robot de l'invention disposant d'une capacité d'adaptation importante.

### 1/Présentation

Le jeu du défi se joue avec un seul robot NAO et se décline du mode solo (un seul humain) à un mode à 3 humains.

Un mode privilégié est le mode à 1 NAO et 3 Humains, c'est celui qui sera principalement décrit dans la présente description.

Le mode solo est un mode d'entrainement ou de démonstration. Il permet à un joueur seul de tester les différentes fonctionnalités du jeu, ou de s'améliorer.

Par la suite, le joueur contrôlant le NAO est dénommé : Joueur N, le joueur Allié du joueur N, est dénommé : Joueur A et enfin l'Ennemi et adversaire des deux premiers joueurs est dénommé : Joueur E.

### 2/Description du Concept

### Objectif

Au début du jeu, les 3 joueurs définissent ensemble un point de Départ (point D) et un point d'arrivée (point A). C'est deux emplacements devront être suffisamment éloignés pour que le NAO ne puisse parcourir la distance qui sépare ces deux points en moins d'une minute. Idéalement, on peut prévoir que ces deux points soient dans des pièces différentes.

Le joueur N doit alors prendre le contrôle du NAO grâce à son iPhone et le piloter pour le faire partir du point D au point A.

Il dispose de 10 minutes pour réaliser ce parcours.

Le joueur E doit lui tout faire pour le faire échouer et ainsi remporter la victoire.

Le joueur A doit aider au mieux le joueur N, par ses conseils et par les actions qu'il peut réaliser.

Il est également possible de fusionner les rôles du joueur N et du joueur A. Le Joueur N pouvant alors lui-même gérer les cartes Alliées.

Le jeu est donc un affrontement entre l'équipe des joueurs N et A contre le joueur E.

### Accessoires de jeu

Il y a en fait trois types d'accessoires dans le jeu :
- L'iPhone : c'est l'accessoire de contrôle, qui permet au joueur N de piloter le NAO.
- Une série de Cartes, possédant ou pas des NAOMARK, qui sont les « pouvoirs » des joueurs A et E.
- Tout type d'accessoires qui peuvent être trouvés dans une maison, cela sera précisé par la suite.

### 3/Mise en place du jeu

Au départ du jeu, le joueur N place le NAO sur le point de départ D. II place un paquet de 20 Cartes devant le joueur A et un paquet de 20 Cartes devant le jouer E. A et E tirent alors 2 cartes dans leur paquet respectif et gardent ces cartes secrètes. (même le joueur A par rapport au joueur N).

Sur l'iPhone, le joueur N lance l'application de jeu. Après une série de Logos, il arrive sur le menu principal.

Dans ce menu, il choisit « jeu à plusieurs ».

Sur l'écran s'affiche un compteur avec 10 minutes et un bouton « Start ».

A ce moment, le joueur N ne peut pas contrôler le NAO.

### 4/Lancement du jeu

Le joueur N presse le bouton « Start » sur son iPhone. Une annonce sonore avertit tous les joueurs que la partie a commencé. Le compte à rebours s'enclenche. Sur l'écran, le temps est donc parfaitement visible.

Le joueur N peut à partir de ce moment contrôler le NAO. Il peut donc bouger.

A des moments clés, l'iPhone annonce la situation de la partie.

Lorsqu'on est à mi temps (5 minutes)

Lorsqu'il ne reste qu'une minute.

Un Bip sonore s'enclenche dans les 10 dernières secondes.

### 5/Victoire et Défaite.

La défaite des joueurs N et A entraine automatiquement la victoire du joueur E et inversement.

Le joueur E ne peut « gagner » par lui même. Sa victoire est la conséquence de la défaite des joueurs N et A.

### Victoire pour les Joueurs N et A

Si le NAO parvient au point d'arrivée, alors que le temps impartit n'est pas encore écoulé, la victoire est acquise.

Afin de valider cette arrivée, une NAOMARK est placée au point A. En reconnaissant cette NAOMARK, NAO peut envoyer l'information de victoire à l'iPhone, ce qui met fin à la partie. Un message de félicitation apparaît sur l'écran de l'iPhone pour les joueurs N et A.

Apres un clic sur l'écran, on revient sur le menu de départ.

### Défaite pour les Joueurs N et A

La défaite est assez simple : si le compteur arrive à Zéro sur l'iPhone, la partie est terminée et le joueur E est vainqueur.

Option : En cas de chute du NAO, on peut, soit déclarer cette chute comme étant définitive, le NAO envoyant un signal de défaite, soit limiter la chute à la perte de temps naturelle qu'elle engendre, soit enfin demander au NAO d'envoyer un message faisant perdre une quantité de temps (30 secondes par exemple), ce qui handicape les joueurs N et A.

### 6/L'iPhone

L'iPhone est le centre de contrôle de la partie, mais également la « télécommande » permettant au joueur N de contrôler NAO.

Les principaux contrôles de NAO exécutés sur l'iPhone sont les contrôles de déplacement. L'accéléromètre inclus dans l'iPhone repère les mouvements des mains du joueur N et les exécute en fonction d'un code programmé, qui peut être par exemple celui illustré par la figure 8d. Il est ainsi possible de faire se déplacer NAO en avant, vers arrière, vers la droite ou vers la gauche.

Grâce à des boutons additionnels sur l'écran, il est possible de demander à NAO de tendre les bras vers l'avant ou d'effectuer tout autre geste que l'on souhaitera programmer.

Comme indiqué en commentaire à la figure 4d, il est possible de remplacer l'iPhone par une autre télécommande disposant de fonctionnalités similaires.

### 7/Les cartes

### Présentation

L'un des aspects notables du jeu est l'utilisation de cartes par les joueurs A et E.

Ces cartes permettent aux joueurs A et E d'intervenir sur le déroulement du jeu, de manière positive ou négative pour le joueur N.

Il existe 2 piles de cartes. Une pour le joueur A et une pour le joueur E.

Les cartes sont différentes dans les 2 piles.

Les cartes sont divisées en catégories et peuvent être activiées dans certains cas par NAO lui même.

### Utilisation

Au départ du jeu, les joueurs A et E tirent 2 cartes chacun. Cela permet en fait d'avoir une certaine stratégie dans l'utilisation des cartes.

Toutes les minutes, (l'iPhone indique le bon moment), les joueurs A et E peuvent tirer une carte supplémentaire.

Les joueurs A et E peuvent utiliser et donc activer les cartes qui sont en leur possession à tout moment.

L'activation de la carte dépend en fait du type de la carte.
- Certaines cartes exigent des actions de certains joueurs.
- Certaines cartes sont activées par NAO lui même : en présentant la carte (munie d'une NAOMARK) à NAO,

### Les cartes alliées

Voici une série de cartes dont le joueur A pourra bénéficier. Les cartes du joueur A sont en général faites pour annuler ou contrer les effets négatifs du joueur E :
- Carte Annulation : cette carte doit être présentée à NAO dans certains cas ; cette carte une fois jouée permet d'annuler une carte ou un effet d'une autre carte (en général une carte négative du joueur E) ;
- Carte Temps supplémentaire : cette carte doit être présentée à NAO ; elle permet d'ajouter une minute au temps restant ;
- Carte Protection : cette carte doit être présentée à NAO ; en enclenchant cette carte, NAO refuse de lire toute carte négative qui lui ai présenté pendant 1 minute ; en revanche, cela ne protège pas des cartes qui ne nécessitent pas la lecture par NAO ;
- Carte Ralentissement : cette carte doit être présentée à NAO ; grâce à cette carte, le temps s'écoule 2 fois moins vite, ce qui permet au joueur N de disposer de plus de temps ;
- Carte Déplacement du Point d'Arrivée : cette carte n'a pas besoin d'être présentée à NAO ; cette carte très particulière n'existe qu'en un seul exemplaire dans le jeu. Elle permet de déplacer le point d'Arrivé dans le but de faciliter la tâche du NAO ; ce déplacement est cependant normalement limité à un rayon de 3 m ;
- La carte Mystère : cette carte doit être présentée à NAO ; son effet est une surprise ; dans la plus part des cas, elle va avoir un effet positif et se comporter comme une carte de type 1 à 4, mais dans un cas sur 5 elle va avoir un effet négatif : elle peut enclencher une Danse du NAO;
- Carte Turbo : Cette carte doit être présentée à NAO ; cette carte permet au NAO pendant 1 minute de se déplacer plus vite.

### Les cartes ennemies

Voici une série de cartes dont le joueur E pourra bénéficier. Les cartes du joueur E sont en général faites pour gêner les joueurs N et A dans leur quête de victoire.

Ce sont les cartes les plus intéressantes car c'est elles qui engendre les défis auxquels NAO est confronté :
- Carte Mouvement : Tour sur place ; cette carte n'est pas présentée à NAO ; en activant cette carte, le joueur E demande au joueur N de faire faire à NAO 3 tours sur place. Cette manoeuvre va donc le retarder ;
- Carte Accélération du Temps : cette carte doit être présentée à NAO ; en activant cette carte, le temps se met à avancer plus vite ;
- Carte Danse : cette carte doit être présentée à NAO ;en activant cette carte, NAO enclenche sur place une danse de démonstration ; celle-ci prend un certain temps et pendant ce temps, le joueur N perd le contrôle de NAO ;
- Carte Obstacle : cette carte n'a pas besoin d'être présentée à NAO ; grâce à cette carte, le joueur E peut placer un obstacle physique sur la route de NAO ; NAO doit alors contourner cet obstacle ou tenter de le franchir, mais en prenant alors le risque de tomber ; il n'y a pas de règle particulière pour le choix de l'obstacle, par contre, le joueur E ne peut en aucun cas bloquer l'accès à l'arrivé, et l'obstacle ne doit jamais être d'une taille supérieure à 2 fois celle de NAO ;
- Carte Balle en Mousse : cette carte n'a pas besoin d'être présentée à NAO (sauf échec) ; cette carte particulière demande à NAO de réaliser un mini-défi ; tout d'abord, NAO doit tendre les bras ; on lui pose ensuite un plateau et on place dessus une balle en mousse ; à partir de cet instant, NAO doit continuer à jouer mais dans cette position ; la difficulté vient du fait qu'il ne doit pas faire tomber la balle en mousse, sinon, il subit une pénalité de 4 minutes (dans ce cas, le joueur E présente la carte au NAO pour valider la perte de temps) ; le joueur A peut utiliser des cartes pour libérer NAO de cette contrainte.
- Carte Commandes Inversées : cette carte doit être présenté à NAO. Une fois activés, les commandes du NAO par le joueur N sont inversées pendant 1 minute, ce qui devient très difficile, surtout si d'autres événements sont actifs (balle en mousse, obstacle, ect...)
- Carte Déplacement du Point d'Arrivée : cette carte n'a pas besoin d'être présentée à NAO ; cette carte très particulière n'existe qu'en un seul exemplaire dans le jeu ; elle permet de déplacer le point d'Arrivé, ce qui complique la tâche de l'équipe Alliée ; ce déplacement doit se faire dans une zone visible par le NAO.

D'autres cartes peuvent aisément être imaginées et ajoutées au jeu ainsi décrit.

### 8/Le mode solo

A partir du menu principal sur l'iPhone, il est possible de choisir le mode Solo. Dans ce cas, le joueur accède à 2 sous-menus :
- Mode Libre : dans ce mode, le joueur va pouvoir contrôler le NAO sans but particulier. Cela permet de jouer avec son NAO en le télécommandant avec son iPhone ;
- Mode Entrainement : dans ce mode, le joueur a le contrôle de NAO et peut reproduire les conditions d'une partie réelle ; le temps est présent et il dispose des cartes A en sa possession ; c'est l'iPhone qui toutes les minutes va enclencher un événement négatif pour retarder le joueur ; l'aspect stratégie n'est pas présent, mais l'entraînement permet de se perfectionner.

Pour mettre en oeuvre l'invention, il faut assurer une communication entre robot joueur et joueur humain ou entre robots joueurs qui soit la moins ambigüe et la plus fluide possible.

Le robot humanoïde de l'invention est avantageusement équipé de capteurs et de logiciels lui permettant de détecter et éventuellement reconnaître des formes, notamment des visages, et des paroles. Cependant compte tenu des imperfections de ce type de mécanismes, il est nécessaire de prévoir des mécanismes de lever de doute ou de contournement en cas de reconnaissance défectueuse.

En particulier, s'agissant de l'aptitude du robot à reconnaître un joueur parmi plusieurs, il est simple et avantageux, dans de nombreuses configurations de jeu, de demander aux joueurs de jouer à leur tour à l'appel de leur indice (Joueur 1, Joueur 2, Joueur 3, etc...).

Les joueurs peuvent également disposer de signes permettant de les reconnaître, tels que des NAOMARK, précédemment décrites.

Il est également possible de communiquer avec le robot par le toucher, sur des parties de son corps prévues à cet effet, telles que la tête, le torse ou les pieds.

Il est notamment souvent nécessaire de prévoir des moyens pour lever les doutes et ambigüités des réponses interprétées par le robot.

S'agissant de la reconnaissance vocale, une Boîte Choix du logiciel Chorégraphe, qui est une des Boîtes dont les rôles et fonctionnements génériques sont expliqués ci-dessus en commentaire à la figure 3, peut être programmée permettre au robot de poser une question (éventuellement vide) à l'utilisateur en rendant disponible par exemple un nombre fini de réponses. Elle est également programmée pour demander à un joueur de fournir des précisions à sa réponse lorsque le robot n'est pas certain de l'avoir correctement reconnue ou interprétée. Ce mécanisme est identique à celui utilisé par un humain qui aurait une audition déficiente ou qui serait plongé dans un environnement rendant sa compréhension difficile. La Boîte Choix est programmée avec des réponses différentes selon le niveau de compréhension de la réponse par le robot. Ces seuils sont fixés en fonction de la confiance de reconnaissance calculée par le logiciel de reconnaissance : par exemple, lorsqu'un premier seuil de reconnaissance n'est pas atteint, le robot demande au joueur de répéter sa réponse ; lorsque le premier seuil est atteint mais lorsqu'un deuxième seuil de reconnaissance plus élevé n'est pas atteint, le robot est programmé pour poser une question dont la réponse permettra normalement de lever le doute.

En retour, le robot communique avec le ou les joueurs par la parole, ou en émettant des signes, notamment avec ses LED, ou en effectuant des gestes. Il peut également être programmé pour communiquer par langage codé, tel que le morse, qui peut être exécuté soit de manière visuelle (LED, gestes) soit de manière sonore.

Compte tenu de sa grande versatilité, le robot joueur de l'invention est apte à incarner plusieurs personnages dans un même jeu. Il peut pour cela avoir plusieurs « personnalités » qui permettent, exprimées notamment par des voix différentes, de démultiplier les possibilités des joueurs et d'accroître l'expérience ludique.

Dans le cadre de la présente invention, sont également prévus des mécanismes de pause et de reprise ainsi que des moyens pour faire face à des incidents tels qu'une chute du robot ou un épuisement de son alimentation électrique.

Des pauses peuvent être programmées par les joueurs réels. La partie est alors sauvegardée dans les différentes mémoires associées aux processeurs où le jeu est éventuellement réparti (robots, PC, sites distants). La reprise est actionnée par le joueur selon une procédure standard ou automatiquement par le robot qui redémarre dans le mode adéquat.

En ce qui concerne les incidents, il peut être prévu des mécanismes de sauvegarde automatique à intervalles réguliers, qui permettent une reprise lorsque l'incident est résolu.

Des procédures permettent également au robot de se relever en position debout ou de se rasseoir après une chute (Procédures Standing, Sitting).

La programmation du robot pour exécuter les comportements prévus dans un jeu s'effectue par l'intermédiaire d'un logiciel d'édition de comportements du type de Chorégraphe™ décrit ci-dessus en commentaire à la figure 3. Ce logiciel comporte des comportements standards. Les comportements particuliers à un jeu peuvent être programmés en langage Python ou en C++ et être associés au projet correspondant au jeu en tant que ressource du projet. Ils seront ainsi appelés en tant que de besoin par les différentes Boîtes de commande constituant l'application. Le robot humanoïde de l'invention peut cependant être utilisé sans qu'il soit nécessaire de disposer du logiciel d'édition des comportements. Dans ce cas, les comportements et autres modules logiciels nécessaires à l'exécution du jeu sont téléchargés sur le robot lui-même, par exemple par l'éditeur du jeu. Différents modes d'exploitation de l'invention sont en effet envisageables

Les exemples décrits ci-dessus sont donnés à titre d'illustration de modes de réalisation de l'invention. Ils ne limitent en aucune manière le champ de l'invention qui est défini par les revendications qui suivent.

## Revendications

1. Robot humanoïde (100) comprenant au moins un processeur configuré pour que le robot se déplace sur des membres inférieurs (140), effectue des mouvements de membres supérieurs (150), émette et recoive des messages appartenant au groupe des messages visuels, sonores, gestuels et/ou tactiles et produise au moins un comportement autonome, ledit au moins un comportement constituant un élément d'une séquence d'un jeu générée en réponse à au moins un message appartenant au groupe des messages visuels, sonores, gestuels et/ou tactiles, ledit robot étant **caractérisé en ce que** ledit au moins un processeur est configuré pour que le robot pose au moins une question sous forme de message appartenant au groupe des messages visuels, sonores, gestuels et/ou tactiles et détermine si au moins un message de réponse appartenant au même groupe contient une réponse vraie, une réponse fausse ou une réponse ambigüe,
ladite détermination par ledit au moins un processeur étant effectuée en sortie d'une boucle d'itérations déterminées en fonction de seuils de reconnaissance desdites réponses.

2. Robot humanoïde selon la revendication 1, **caractérisé en ce que** ledit robot est apte à reconnaître des objets dans son environnement et à les intégrer dans la séquence dudit jeu.

3. Robot humanoïde selon l'une des revendications 1 à 2, **caractérisé en ce qu'**il est l'animateur d'un jeu de questions-réponses auquel participe au moins un autre joueur qui doit fournir les réponses aux questions posées par le robot.

4. Robot humanoïde selon l'une des revendications 1 à 2, **caractérisé en ce qu'**il est un des joueurs d'un jeu auquel participe au moins un autre joueur et dans lequel il doit reconnaître une personne ou une chose en fonction au moins d'indices qui lui sont communiqués par ledit au moins un autre joueur.

5. Robot humanoïde selon l'une des revendications 1 à 2, **caractérisé en ce qu'**il est un joueur d'un jeu dans lequel il est apte à coopérer avec au moins un autre joueur pour résoudre au moins une énigme.

6. Robot humanoïde selon l'une des revendications 1 à 2, **caractérisé en ce que** ses mouvements sont déterminés pour partie en fonction de premières consignes de déplacements qui lui sont communiquées par une télécommande manipulée par un premier joueur, de deuxièmes consignes de déplacements, antagonistes aux premières consignes, qui lui sont communiquées visuellement par un deuxième joueur et de troisièmes consignes de déplacements, antagonistes aux deuxièmes consignes qui lui sont communiquées par un troisième joueur.

7. Robot humanoïde selon l'une des revendications 1 à 6, **caractérisé en ce que** au moins deux robots participent à un même jeu, lesdits au moins deux robots étant en communication par au moins un message visuel, sonore et/ou gestuel.

8. Robot humanoïde selon l'une des revendications 1 à 6, **caractérisé en ce que** au moins deux robots participent à un même jeu, lesdits au moins deux robots étant en communication par échange de messages de comportements.

9. Robot humanoïde selon la revendication 8, **caractérisé en ce que** ledit échange de messages de comportements est activé après une étape d'identification réciproque desdits robots par échange d'informations les caractérisant.

10. Robot humanoïde selon la revendication 9, **caractérisé en ce que** lesdits au moins deux robots sont en outre aptes à télécharger un signal de synchronisation de leurs mouvements.

11. Robot humanoïde selon l'une des revendications 1 à 10, **caractérisé en ce qu'**au moins un robot joueur et un autre joueur se situent dans deux lieux non reliés par un réseau local.

12. Robot humanoïde selon la revendication 11, **caractérisé en ce que** lesdits au moins un robot joueur et un autre joueur communiquent par protocole de communication sur réseau étendu et **en ce que** ledit robot joueur est doté de moyens autonomes de traitement pour l'encodage des accès réseau.

13. Robot humanoïde selon l'une des revendications 1 à 12, **caractérisé en ce qu'**un joueur est apte à communiquer avec lui par l'intermédiaire d'un code visuel.

14. Robot humanoïde selon l'une des revendications 1 à 13, **caractérisé en ce qu'**il est apte à réaliser une fonction d'assistance d'au moins un autre joueur consistant à effectuer au moins une action dans le jeu à la place du joueur.

15. Robot humanoïde selon l'une des revendications 1 à 14, **caractérisé en ce que** ledit robot est apte à déclencher et gérer les interruptions et reprises d'une séquence de jeu.

16. Robot humanoïde selon l'une des revendications 1 à 15, **caractérisé en ce que** ledit robot est apte à reconnaître au moins un joueur parmi plusieurs, ladite reconnaissance utilisant un indice appartenant au groupe des indices visuels, sonores, gestuels et/ou tactiles.

17. Procédé de contrôle d'un robot humanoïde comprenant au moins un processeur configuré pour permettre audit robot de se déplacer sur des membres inférieurs (140), d'effectuer des mouvements de membres supérieurs (150), d'émettre et recevoir des messages appartenant au groupe des messages visuels, sonores, gestuels et/ou tactiles et de produire au moins un comportement autonome, ledit au moins un comportement constituant un élément d'une séquence d'un jeu générée en réponse à au moins un message appartenant au groupe des messages visuels, sonores et/ou gestuels, ledit procédé étant **caractérisé en ce qu'**il comprend une étape, exécutée par ledit au moins un processeur, dans laquelle ledit robot pose au moins une question sous forme de message appartenant au groupe des messages visuels, sonores, gestuels et/ou tactiles et détermine si au moins un message de réponse appartenant au même groupe contient une réponse vraie, une réponse fausse ou une réponse ambigüe, ladite détermination par ledit au moins un processeur étant effectuée en sortie d'une boucle d'itérations déterminées en fonction de seuils de reconnaissance desdites réponses.

18. Programme d'ordinateur comprenant des instructions de code de programme permettant l'exécution du procédé selon la revendication 17 lorsque le programme est exécuté sur un ordinateur, ledit programme étant configuré pour permettre à un robot humanoïde de se déplacer sur des membres inférieurs (140), d'effectuer des mouvements de membres supérieurs (150), d'émettre et de recevoir des messages appartenant au groupe des messages visuels, sonores, gestuels et/ou tactiles et de produire au moins un comportement autonome, ledit au moins un comportement constituant un élément d'une séquence d'un jeu générée en réponse à au moins un message appartenant au groupe des messages visuels, sonores et/ou gestuel, ledit programme étant **caractérisé en ce qu'**il comprend un module configuré pour générer un comportement dans lequel ledit robot pose au moins une question sous forme de message appartenant au groupe des messages visuels, sonores, gestuels et/ou tactiles et un module configuré pour déterminer si au moins un message de réponse appartenant au même groupe contient une réponse vraie, une réponse fausse ou une réponse ambigüe, ladite détermination par ledit au moins un processeur étant effectuée en sortie d'une boucle d'itérations déterminées en fonction de seuils de reconnaissance desdites réponses.

## Patentansprüche

1. Humanoider Roboter (100), der mindestens einen Prozessor umfasst, der konfiguriert ist, damit sich der Roboter auf seinen unteren Gliedmaßen (140) fortbewegt, mit seinen oberen Gliedmaßen (150) Bewegungen durchführt, Nachrichten, die zur Gruppe der visuellen, akustischen, gestischen und/oder taktilen Nachrichten gehören, sendet und empfängt und mindestens ein autonomes Verhalten zeigt, wobei das mindestens eine Verhalten ein Element einer Sequenz eines Spiels darstellt, die als Antwort auf mindestens eine Nachricht erzeugt wird, die zur Gruppe der visuellen, akustischen, gestischen und/oder taktilen Nachrichten gehört, wobei der Roboter **dadurch gekennzeichnet ist, dass** der mindestens eine Prozessor konfiguriert ist, damit der Roboter mindestens eine Frage in Form einer Nachricht stellt, zur Gruppe der visuellen, akustischen, gestischen und/oder taktilen Nachrichten gehört und bestimmt, ob mindestens eine Antwortnachricht, die zur selben Gruppe gehört, eine richtige Antwort, eine falsche Antwort oder eine mehrdeutige Antwort enthält,
wobei die Bestimmung durch den mindestens einen Prozessor am Ausgang einer Schleife von Iterationen vorgenommen wird, die in Abhängigkeit von Erkennungsschwellen der Antworten bestimmt werden.

2. Humanoider Roboter nach Anspruch 1, **dadurch gekennzeichnet, dass** der Roboter imstande ist, Objekte in seiner Umgebung zu erkennen und sie in die Sequenz des Spiels zu integrieren.

3. Humanoider Roboter nach einem der Ansprüche 1 bis 2, **dadurch gekennzeichnet, dass** er der Animateur eines Frage-Antwort-Spiels ist, an dem mindestens ein anderer Spieler teilnimmt, der die Antworten auf die vom Roboter gestellten Fragen liefern muss.

4. Humanoider Roboter nach einem der Ansprüche 1 bis 2, **dadurch gekennzeichnet, dass** er einer der Spieler eines Spiels ist, an dem mindestens ein anderer Spieler teilnimmt und in dem er eine Person oder eine Sache in Abhängigkeit von mindestens Indizien erkennen muss, die ihm von dem mindestens einen anderen Spieler kommuniziert werden.

5. Humanoider Roboter nach einem der Ansprüche 1 bis 2, **dadurch gekennzeichnet, dass** er ein Spieler eines Spiels ist, in welchem er imstande ist, mit mindestens einem anderen Spieler zu kooperieren, um mindestens ein Rätsel zu lösen.

6. Humanoider Roboter nach einem der Ansprüche 1 bis 2, **dadurch gekennzeichnet, dass** seine Bewegungen teilweise in Abhängigkeit von ersten Verlagerungsanweisungen bestimmt sind, die ihm von einer Fernsteuerung kommuniziert werden, die von einem ersten Spieler bedient wird, von zweiten, zu den ersten Anweisungen antagonistischen Verlagerungsanweisungen, die ihm visuell von einem zweiten Spieler kommuniziert werden und von dritten, zu den zweiten Anweisungen antagonistischen Verlagerungsanweisungen, die ihm von einem dritten Spieler kommuniziert werden.

7. Humanoider Roboter nach einem der Ansprüche 1 bis 6, **dadurch gekennzeichnet, dass** mindestens zwei Roboter an einem selben Spiel teilnehmen, wobei die mindestens zwei Roboter durch mindestens eine visuelle, akustische und/oder gestische Nachricht in Kommunikation sind.

8. Humanoider Roboter nach einem der Ansprüche 1 bis 6, **dadurch gekennzeichnet, dass** mindestens zwei Roboter an einem selben Spiel teilnehmen, wobei die mindestens zwei Roboter durch Austausch von Verhaltensnachrichten in Kommunikation sind.

9. Humanoider Roboter nach Anspruch 8, **dadurch gekennzeichnet, dass** der Austausch von Verhaltensnachrichten nach einem gegenseitigen Identifikationsschritt der Roboter durch Austausch von sie charakterisierenden Informationen aktiviert wird.

10. Humanoider Roboter nach Anspruch 9, **dadurch gekennzeichnet, dass** die mindestens zwei Roboter ferner imstande sind, ein Synchronisierungssignal ihrer Bewegungen herunterzuladen.

11. Humanoider Roboter nach einem der Ansprüche 1 bis 10, **dadurch gekennzeichnet, dass** sich mindestens ein Spielroboter und ein anderer Spielroboter an zwei Stellen befinden, die nicht durch ein lokales Netzwerk verbunden sind.

12. Humanoider Roboter nach Anspruch 11, **dadurch gekennzeichnet, dass** der mindestens eine Spielroboter und ein anderer Spieler anhand Kommunikationsprotokoll über erweitertes Netzwerk kommunizieren und dass der Spielroboter mit autonomen Verarbeitungsmitteln für die Codierung der Netzzugänge ausgestattet ist.

13. Humanoider Roboter nach einem der Ansprüche 1 bis 12, **dadurch gekennzeichnet, dass** ein Spieler imstande ist, mit ihm über einen visuellen Code zu kommunizieren.

14. Humanoider Roboter nach einem der Ansprüche 1 bis 13, **dadurch gekennzeichnet, dass** er imstande ist, eine Assistenzfunktion mindestens eines anderen Spielers zu erfüllen, die darin besteht, in dem Spiel mindestens eine Aktion anstelle des Spielers durchzuführen.

15. Humanoider Roboter nach einem der Ansprüche 1 bis 14, **dadurch gekennzeichnet, dass** der Roboter imstande ist, Unterbrechungen und Wiederaufnahmen einer Sequenz des Spiels auszulösen und zu verwalten.

16. Humanoider Roboter nach einem der Ansprüche 1 bis 15, **dadurch gekennzeichnet, dass** der Roboter imstande ist, mindestens einen Spieler unter mehreren zu erkennen, wobei die Erkennung ein Indiz verwendet, das zur Gruppe der visuellen, akustischen, gestischen und/oder taktilen Indizien gehört.

17. Verfahren zur Steuerung eines humanoiden Roboters, der mindestens einen Prozessor umfasst, der konfiguriert ist, damit sich der Roboter auf seinen unteren Gliedmaßen (140) fortbewegen, mit seinen oberen Gliedmaßen (150) Bewegungen durchführen, Nachrichten, die zur Gruppe der visuellen, akustischen, gestischen und/oder taktilen Nachrichten gehören, senden und empfangen und mindestens ein autonomes Verhalten zeigen kann, wobei das mindestens eine Verhalten ein Element einer Sequenz eines Spiels darstellt, die als Antwort auf mindestens eine Nachricht erzeugt wird, die zur Gruppe der visuellen, akustischen und/oder gestischen Nachrichten gehört, wobei das Verfahren **dadurch gekennzeichnet ist, dass** es einen Schritt umfasst, der von dem mindestens einen Prozessor durchgeführt wird, in welchem der Roboter mindestens eine Frage in Form einer Nachricht stellt, die zur Gruppe der visuellen, akustischen, gestischen und/oder taktilen Nachrichten gehört und bestimmt, ob mindestens eine Antwortnachricht, die zur selben Gruppe gehört, eine richtige Antwort, eine falsche Antwort oder eine mehrdeutige Antwort enthält, wobei die Bestimmung durch den mindestens einen Prozessor am Ausgang einer Schleife von Iterationen vorgenommen wird, die in Abhängigkeit von Erkennungsschwellen der Antworten bestimmt werden.

18. Rechnerprogramm, das Programmcodeinstruktionen umfasst, die die Ausführung des Verfahrens nach Anspruch 17 erlauben, wenn das Programm auf einem Rechner ausgeführt wird, wobei das Programm konfiguriert ist, um einem humanoiden Roboter zu erlauben, sich auf seinen unteren Gliedmaßen (140) fortzubewegen, mit seinen oberen Gliedmaßen (150) Bewegungen durchzuführen, Nachrichten, die zur Gruppe der visuellen, akustischen, gestischen und/oder taktilen Nachrichten gehören, zu senden und zu empfangen und mindestens ein autonomes Verhalten zu zeigen, wobei das mindestens eine Verhalten ein Element einer Sequenz eines Spiels darstellt, die als Antwort auf mindestens eine Nachricht erzeugt wird, die zur Gruppe der visuellen, akustischen und/oder gestischen Nachrichten gehört, wobei das Programm **dadurch gekennzeichnet ist, dass** es ein Modul umfasst, das konfiguriert ist, um ein Verhalten zu erzeugen, bei dem der Roboter mindestens eine Frage in Form einer Nachricht stellt, die zur Gruppe der visuellen, akustischen, gestischen und/oder taktilen Nachrichten gehört und ein Modul, das konfiguriert ist, um zu bestimmen, ob mindestens eine Antwortnachricht, die zur selben Gruppe gehört, eine richtige Antwort, eine falsche Antwort oder eine mehrdeutige Antwort enthält, wobei die Bestimmung durch den mindestens einen Prozessor am Ausgang einer Schleife von Iterationen vorgenommen wird, die in Abhängigkeit von Erkennungsschwellen der Antworten bestimmt werden.

## Claims

1. Humanoid robot (100) comprising at least one processor which is configured so that the robot moves on lower limbs (140), carries out movements of upper limbs (150), transmits and receives messages selected from a group of visual, audible, gestural and/or tactile messages and produces at least one autonomous behaviour, the at least one behaviour constituting an element of a game sequence generated in response to at least one message selected from the group of visual, audible, gestural and/or tactile messages, the robot being **characterised in that** the at least one processor is configured so that the robot poses at least one question in the form of a message selected from the group of visual, audible, gestural and/or tactile messages and determines whether at least one response message selected from the same group contains a correct response, a false response or an ambiguous response,
the determination by the at least one processor being carried out at the output of a loop of iterations which are determined in accordance with recognition thresholds of the responses.

2. Humanoid robot according to claim 1, **characterised in that** the robot is capable of recognising objects in its environment and integrating them into the sequence of said game.

3. Humanoid robot according to either claim 1 or claim 2, **characterised in that** it is the compere of a game of questions/responses in which at least one other player, who must provide the responses to the questions asked by the robot, participates.

4. Humanoid robot according to either claim 1 or claim 2, **characterised in that** it is one of the players of a game in which at least one other player participates and in which it must recognise a person or a thing as a function at least of clues which are communicated to it by the at least one other player.

5. Humanoid robot according to either claim 1 or claim 2, **characterised in that** it is a player of a game in which it is able to cooperate with at least one other player in order to solve at least one riddle.

6. Humanoid robot according to either claim 1 or claim 2, **characterised in that** its movements are determined in part as a function of first displacement directives which are communicated to it by a remote control manipulated by a first player, second displacement directives antoagonistic to the first directives and which are communicated to it visually by a second player and third displacement directives antagonistic to the second directives and which are communicated to it by a third player.

7. Humanoid robot according to any one of claims 1 to 6, **characterised in that** at least two robots participate in the same game, said at least two robots being in communication through at least one visual, audible and/or gestural message.

8. Humanoid robot according to any one of claims 1 to 6, **characterised in that** at least two robots participate in the same game, said at least two robots being in communication by exchange of behaviour messages.

9. Humanoid robot according to claim 8, **characterised in that** said exchange of behaviour messages is activated after a step of reciprocal identification of said robots by exchange of information characterising them.

10. Humanoid robot according to claim 9, **characterised in that** said at least two robots are further able to download a signal for synchronising their movements.

11. Humanoid robot according to any one of claims 1 to 10, **characterised in that** at least one robot player and another player are situated in two places not linked by a local network.

12. Humanoid robot according to claim 11, **characterised in that** said at least one robot player and another player communicate by wide area network communication protocol and **in that** said player robot is endowed with autonomous processing means for the encoding network accesses.

13. Humanoid robot according to any one of claims 1 to 12, **characterised in that** a player is able to communicate with it by way of a visual code.

14. Humanoid robot according to any one of claims 1 to 13, **characterised in that** it is capable of carrying out a function of assistance of at least one other player involving performing at least one action in the game in place of the player.

15. Humanoid robot according to any one of claims 1 to 14, **characterised in that** said robot is capable of triggering and managing the interruptions and resumptions of a game sequence.

16. Humanoid robot according to any one of claims 1 to 15, **characterised in that** the robot is capable of recognising at least one player from among several players, said recognition using a clue selected from a group of visual, audible, gestural and/or tactile clues.

17. Method of controlling a humanoid robot comprising at least one processor which is configured to allow the robot to move on lower limbs (140), to perform movements of upper limbs (150), to send and receive messages selected from a group of visual, audible, gestural and/or tactile messages and to produce at least one autonomous behaviour, said at least one behaviour constituting an element of a game sequence generated in response to at least one message selected from the group of visual, audible and/or gestural messages, said method being **characterised in that** it comprises a step which is carried out by the at least one processor, in which said robot asks at least one question in the form of a message selected from the group of visual, audible, gestural and/or tactile messages and determines whether at least one response message belonging to the same group contains a correct response, a false response or an ambiguous response, the determination by the at least one processor being carried out at the output of a loop of iterations which are determined in accordance with recognition thresholds of the responses.

18. Computer programme comprising programme code instructions allowing the execution of the method according to claim 17 when the programme is executed on a computer, the programme being adapted for allowing a humanoid robot to move on its lower limbs (140), to perform movements of upper limbs (150), to send and to receive messages selected from a group of visual, audible, gestural and/or tactile messages and to produce at least one autonomous behaviour, said at least one behaviour constituting an element of a game sequence generated in response to at least one message selected from the group of visual, audible and/or gestural messages, the programme being **characterised in that** it comprises a module capable of generating a behaviour in which said robot asks at least one question in the form of a message selected from the group of visual, audible, gestural and/or tactile messages and a module capable of determining whether at least one response message belonging to the same group contains a correct response, a false response or an ambiguous response, the determination by the at least one processor being carried out at the output of a loop of iterations which are determined in accordance with recognition thresholds of the responses.
